# EUROPEAN PATENT APPLICATION

(11) **EP 4 693 027 A1**
(43) Date of publication of application: **11.02.2026**
(21) Application number: 24810189.1
(22) Date of filing: 06.05.2024
(51) Int. Cl.: G06F 8/76

(54) **SERVICE PROCESSING METHOD AND APPARATUS, DEVICE, STORAGE MEDIUM AND PROGRAM PRODUCT**

(30) Priority: 23.05.2023 CN 202310591075
(71) Applicant: Tencent Technology (Shenzhen) Company Limited, Shenzhen, Guangdong 518057 (CN)
(72) Inventor: WU, Wenjie, Shenzhen, Guangdong 518057 (CN)
(74) Representative: Gunzelmann, Rainer
(86) International application number: PCT/CN2024/091102
(87) International publication number: WO 2024/239942

(57) **Abstract**

The present application discloses a service processing method, a related apparatus, a device and a storage medium. The method of the present application comprises: acquiring a configuration information set for a target merchant; when running a built-in universal code of an interactive device, displaying a service home page according to the configuration information set, wherein the built-in universal code is a code written by a device producer; in response to an information acquisition prompt of the service home page, acquiring target biological information of a target object by means of an acquisition apparatus of the interactive device; and when a biometric identification service is not activated for a target object account, in response to an authorization activation operation from a target user terminal, displaying a service activation page. The present application does not require a lot of time and manpower to develop service codes, thereby reducing the development cost, and improving the development efficiency and code maintainability.

## Description

### RELATED APPLICATION

This application claims priority to Chinese Patent Application No. 2023105910750, filed with the China National Intellectual Property Administration on May 23, 2023 and entitled "SERVICE PROCESSING METHOD, RELATED APPARATUS, DEVICE, AND STORAGE MEDIUM".

### FIELD OF THE TECHNOLOGY

This application relates to the field of computer technologies, and in particular, to data processing.

### BACKGROUND OF THE DISCLOSURE

With the rapid development of the Internet, the requirements for communication security are increasingly high, and identity authentication technologies are increasingly valued. Nowadays, identity authentication manners are increasingly diversified. In addition to identity authentication performed by using an account and a password, identity authentication may also be performed by using biometric recognition manners such as face recognition, palm swiping recognition, and fingerprint recognition.

With continuous expansion of types of service scenarios, for different service scenarios, corresponding service code usually needs to be developed. A palm swiping service is used as an example, and supported service scenarios include an access control scenario, a payment scenario, a check-in scenario, and the like. Therefore, independent code needs to be separately developed for these scenarios, to support procedures such as registration, authorization, and verification.

Solutions in the related art have at least the following problems: a merchant needs to spend much time and manpower on developing service code, to support a particular service scenario. Consequently, development and maintenance costs are high. In view of the foregoing problem, no effective solution has been provided yet.

### SUMMARY

Embodiments of this application provide a data processing method and apparatus, a device, a storage medium, and a program product. There is no need to spend much time and manpower on developing service code, thereby reducing development costs, and improving development efficiency and code maintainability.

In view of this, according to an aspect of this application, a data processing method is provided, including:
obtaining a configuration information set for a merchant;
displaying the service main page based on the configuration information set when embedded general-purpose code of the interactive device is run, the embedded general-purpose code being pre-written code, the embedded general-purpose code including a configuration field, and a configuration field value of the configuration field being assigned according to the configuration information set;
obtaining biological information of an object by using a collection apparatus of the interactive device in response to an information collection prompt on the service main page, the object being corresponding to an object account, and the object account being an account logged in on a user terminal; and
displaying, in a case that a biological recognition service is not enabled for the object account, a service enabling page in response to an authorized enabling operation from the user terminal, the service enabling page being configured for prompting that the biological recognition service is enabled, and the biological recognition service being configured for enabling performing a related service based on a biological information recognition result.

Another aspect of this application provides a data processing method, including:
obtaining, in response to a configuration operation for at least one piece of information, a configuration information set for a merchant, the merchant being corresponding to a merchant identifier; and
transmitting the configuration information set and the merchant identifier to a server, for the server to store the configuration information set corresponding to the merchant identifier, the method according to the foregoing aspects being implemented in a case that an interactive device obtains the configuration information set from the server.

Another aspect of this application provides a data processing apparatus, including:
an obtaining module, configured to obtain a configuration information set for a merchant; and
a display module, configured to display the service main page based on the configuration information set when embedded general-purpose code of an interactive device is run, the embedded general-purpose code being pre-written code, the embedded general-purpose code including a configuration field, and a configuration field value of the configuration field being assigned according to the configuration information set;
the obtaining module being further configured to obtain biological information of an object by using a collection apparatus of the interactive device in response to an information collection prompt on the service main page, the object being corresponding to a object account, and the object account being an account logged in on a user terminal; and
the display module being further configured to display, in a case that a biological recognition service is not enabled for the object account, a service enabling page in response to an authorized enabling operation from the target user terminal, the service enabling page being configured for prompting that the biological recognition service is enabled, and the biological recognition service being configured for enabling performing a related service based on a biological information recognition result.

Another aspect of this application provides a data processing apparatus, including:
an obtaining module, configured to obtain, in response to a configuration operation for at least one piece of information, a configuration information set for a merchant, the merchant being corresponding to a merchant identifier; and
a transmitting module, configured to transmit the configuration information set and the merchant identifier to a server, for the server to store the configuration information set corresponding to the merchant identifier, the method according to the foregoing aspects being implemented in a case that an interactive device obtains the configuration information set from the server.

Another aspect of this application provides an electronic device, including a memory and a processor, the memory storing a computer program, and the processor, when executing the computer program, implementing the method in the foregoing aspects.

Another aspect of this application provides a computer-readable storage medium, having a computer program stored therein, the computer program, when being executed by a processor, implementing the method in the foregoing aspects.

Another aspect of this application provides a computer program product, including a computer program, the computer program, when being executed by a processor, implementing the method in the foregoing aspects.

It may be learned from the foregoing technical solutions that the embodiments of this application have the following advantages.

In embodiments of this application, a data processing method is provided. First, an interactive device obtains a configuration information set for a merchant. The interactive device displays a service main page based on the configuration information set when embedded general-purpose code of the interactive device is run. The embedded general-purpose code is pre-written code. Next, biological information of an object is obtained by using a collection apparatus of the interactive device in response to an information collection prompt on the service main page. In a case that a biological recognition service is not enabled for the object account, a service enabling page is displayed in response to an authorized enabling operation from a user terminal. In the foregoing manner, a device manufacturer writes the embedded general-purpose code into the interactive device, so that each interactive device uses the same set of embedded general-purpose code to run a related service. The merchant configures related information according to a requirement of a service scenario. Based on this, after accessing the interactive device, the merchant uses the configuration information as a configuration field value in the embedded general-purpose code. Therefore, not only a standardized framework can be provided based on the embedded general-purpose code to implement a service process, but also the merchant is able to perform personalized configuration based on the standardized framework. There is no need to spend much time and manpower on developing the service code, thereby reducing development costs, and improving development efficiency and code maintainability.

### BRIEF DESCRIPTION OF THE DRAWINGS

FIG. 1 is a schematic diagram of an implementation environment of a service processing method according to an embodiment of this application.
FIG. 2 is a schematic diagram of an architecture design of a service processing method according to an embodiment of this application.
FIG. 3 is a schematic flowchart of a service processing method according to an embodiment of this application.
FIG. 4 is a schematic diagram of a standardized design of a service main page according to an embodiment of this application.
FIG. 5 is a schematic diagram of a service main page according to an embodiment of this application.
FIG. 6 is a schematic diagram of enabling a biological recognition service based on a user-scan mode according to an embodiment of this application.
FIG. 7 is a schematic diagram of enabling a biological recognition service by a user by using a child application according to an embodiment of this application.
FIG. 8 is a schematic flowchart of enabling a biological recognition service based on a user-scan mode according to an embodiment of this application.
FIG. 9 is a schematic diagram of enabling a biological recognition service based on a merchant-scan mode according to an embodiment of this application.
FIG. 10 is another schematic diagram of enabling a biological recognition service by a user by using a child application according to an embodiment of this application.
FIG. 11 is a schematic flowchart of enabling a biological recognition service based on a merchant-scan mode according to an embodiment of this application.
FIG. 12 is a schematic diagram of an interface on which a recognition denial pop-up window is displayed according to an embodiment of this application.
FIG. 13 is a schematic diagram of an interface on which a poster picture is displayed according to an embodiment of this application.
FIG. 14 is a schematic flowchart of performing a payment service according to an embodiment of this application.
FIG. 15 is a schematic flowchart of performing an access control service according to an embodiment of this application.
FIG. 16 is a schematic diagram of a standardized capability implementation framework of an interactive device according to an embodiment of this application.
FIG. 17 is a schematic flowchart of delivering configuration information by a background according to an embodiment of this application.
FIG. 18 is a schematic diagram of a working sequence of a service processing system according to an embodiment of this application.
FIG. 19 is another schematic flowchart of a service processing method according to an embodiment of this application.
FIG. 20 is a schematic diagram of a standardized configuration design according to an embodiment of this application.
FIG. 21 is a schematic diagram of configuring related information based on a merchant configuration platform according to an embodiment of this application.
FIG. 22 is a schematic diagram of configuring an audio file based on a merchant configuration platform according to an embodiment of this application.
FIG. 23 is a schematic diagram of configuring a poster file based on a merchant configuration platform according to an embodiment of this application.
FIG. 24 is a schematic diagram of a service processing apparatus according to an embodiment of this application.
FIG. 25 is another schematic diagram of a service processing apparatus according to an embodiment of this application.
FIG. 26 is a schematic diagram of a structure of an electronic device according to an embodiment of this application.

### DESCRIPTION OF EMBODIMENTS

Embodiments of this application provide a data processing method, a related apparatus, a device, and a storage medium. There is no need to spend much time and manpower on developing service code, thereby reducing development costs, and improving development efficiency and code maintainability.

The terms such as "first", "second", "third", and "fourth" (if any) in the specification and claims of this application and in the accompanying drawings are used for distinguishing similar objects and not necessarily used for describing any particular order or sequence. Data used in this way is exchangeable in a proper case, so that the embodiments of this application described herein can be implemented in an order different from the order shown or described herein. In addition, the terms "include", "corresponding to" and any other variants are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

With continuous development of science and technology, the biological recognition technology is also improving. The biological recognition technology is gradually popularized to various fields, and bring more convenient and secure experience to people's life. However, there are many service scenarios implemented based on the biological recognition technology. Therefore, corresponding service code usually needs to be developed based on different service scenarios. Consequently, development costs and code operation and maintenance costs are high.

Based on this, in an embodiment of this application, a data processing method, alternatively referred to as a service processing method, is provided, to avoid repeated development and reduce merchant access and adaptation costs. This application provides a unified and standardized general framework capability for a merchant standardization application (APP) deployed on an interactive device, to resolve, in a one-stop manner, problems such as Internet of Things (IoT) upgrade, data reporting, and read-only memory (ROM) construction. The service processing method provided in this application includes at least one of the following service scenarios when being applied.

### 1. Payment service scenario.

After authorizing to enable a biological payment service for a merchant, a user may complete payment for an order through biological recognition. Palm swiping payment is used as an example. A user A has enabled a palm swiping payment service for "Merchant A". "Merchant A" belongs to a convenience store. Based on this, after selecting a commodity in a convenience store corresponding to "Merchant A", the user A may perform payment through palm swiping.

### 2. Access control service scenario.

After authorizing to enable a biological pass service for a merchant, a user may enable access control through biological recognition. Palm swiping recognition is used as an example. The user A has enabled a palm swiping pass service for "Merchant B". "Merchant B" belongs to a cell. Based on this, when entering a cell corresponding to "Merchant B", the user A may enable access control through palm swiping.

### 3. Check-in service scenario.

After authorizing to enable a biological check-in service for a merchant, a user may complete check-in through biological recognition. Palm swiping recognition is used as an example. The user A has enabled a palm swiping check-in service for "Merchant C". "Merchant C" belongs to a gym. Based on this, after entering a gym corresponding to "Merchant C", the user A may complete check-in through palm swiping, thereby completing a check-in and punch-in task.

The foregoing application scenarios are merely examples, and the service processing method provided in this embodiment may be further applied to other scenarios. This is not limited herein.

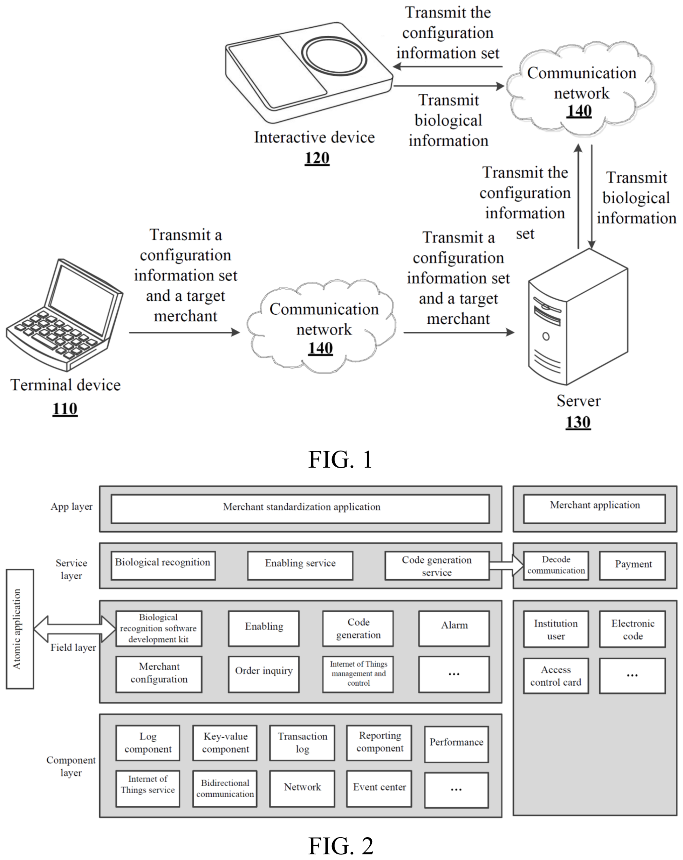

The method provided in this application may be applied to an implementation environment shown in FIG. 1. The implementation environment includes a terminal device 110, an interactive device 120, and a server 130. The terminal device 110 may communicate with the server 130 through a communication network 140, and the interactive device 120 may communicate with the server 130 through the communication network 140. The communication network 140 uses standard communication technologies and/or protocols, is usually the Internet, but may alternatively be any other network, including but not limited to, Bluetooth, a local area network (LAN), a metropolitan area network (MAN), a wide area network (WAN), or any combination of a mobile, a dedicated network, or a virtual dedicated network. In some embodiments, the foregoing data communication technology may be replaced or supplemented by using a customized or dedicated data communication technology. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

The terminal device 110 involved in this application includes, but is not limited to, a mobile phone, a computer, an intelligent voice interaction device, an intelligent household appliance, an in-vehicle terminal, an aircraft, and the like. A client is deployed on the terminal device 110, and the client may run on the terminal device 110 in a form of a browser, or may run on the terminal device 110 in a form of an independent APP. The interactive device 120 in this application includes but is not limited to a palm swiping device (e.g., a palm recognition device), a face swiping device (e.g., a facial recognition device), a vocal print recognition device, and the like.

The server 130 involved in this application may be an independent physical server, or may be a server cluster or a distributed system formed by a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence (AI) platform.

With reference to the foregoing implementation environment, a target merchant configures, by using the terminal device 110, information related to a particular service. After configuration is completed, the terminal device 110 transmits, to the server 130 by using the communication network 140, a configuration information set and a target merchant identifier corresponding to the target merchant. Because the target merchant identifier has a binding relationship with the target device identifier of the interactive device 120, the server 130 may deliver a corresponding configuration information set to the interactive device 120 by using the communication network 140. In an actual service scenario, the interactive device 120 collects biological information of a user, the interactive device 120 transmits the biological information to the server 130 by using the communication network 140, and may execute a related service after successfully recognizing the biological information.

Based on a system shown in FIG. 1, an architecture design of the service processing method is described below with reference to FIG. 2. Referring to FIG. 2, FIG. 2 is a schematic diagram of an architecture design of a service processing method according to an embodiment of this application. As shown in the figure, a merchant standardization APP is deployed on an interactive device, and a merchant APP is deployed on a merchant terminal. The merchant standardization APP and the merchant APP are defined as upper-layer applications. A standardized recognition interaction user interface (UI) and a standard interaction UI are presented by using the merchant standardization APP, to implement different device modes.

A service layer defines a capability of providing a service for an application layer. The interactive device mainly includes biological recognition (for example, palm swiping recognition), an enabling service, and a code generation service (for example, unidirectional code generation communication and bidirectional code generation communication), and the like. The merchant terminal mainly includes a decode communication service, a payment service, and the like.

A field layer defines a core service model, configured to implement a service logic and a service rule. The interactive device mainly includes a biological recognition SDK (for example, a palm swiping recognition SDK), enabling, code generation, alarm, merchant configuration, order inquiry, IoT management and control, and the like.

A component layer defines a component unrelated to a service. The interactive device mainly includes a log component, an internal memory-mapped high-performance general-purpose key-value (mmap key-value, MMKV) component, a transaction log (Xlog), a reporting component, performance, an IoT service, bidirectional communication, a network, an event center, and the like.

In view of that this application relates to some terms related to the technical field, for ease of understanding, the terms are explained below.
(1) Lite point of sale (LPOS) mode: represents a lightweight POS machine mode, and is different from a software development kit (SDK) mode.
(2) SDK mode: a service function is implemented by a third party. An SDK provided by a manufacturer is integrated, and an interface of the manufacturer is called to implement a recognition function.
(3) Atomic App: configured to provide some modules, functions, and features in minimum granularities that are atomic and that cannot be split. The atomic combinations may flexibly adapt to a service requirement in each scenario. The "atomic" herein is not merely a code module granularity at a technical level, but also refers to a granularity at a function/feature. For example, an enabling procedure may be divided into registration, authorization, and verification procedures, for free combination of service scenarios.
(4) Merchant standardization APP: belongs to a service abstract App, integrates a biological collection SDK (for example, a palm swiping SDK), and completes cross-process communication call of an Android interface definition language (AIDL) in cooperation with the biological collection SDK (for example, a palm swiping SDK).
(5) Identification identifier (OpenID): the OpenID is an identification identifier existing as a part of an application open platform. It allows an official account or a mini program to identify a user, so that the official account or the mini program may record information about the user and provide a personalized service. For example, recommending related content to a user based on a historical record and preference of the user, or providing a marketing policy based on an interest of the user. The application OpenID may further be configured for functions such as payment and social sharing.
(6) Merchant-scan enabling mode: refers to a process in which a merchant scans a payment code of a user on a payment application by using a merchant-scan payment terminal, to complete enabling.
(7) User-scan enabling mode: refers to a process in which a user scans, by using a payment application on a user-scan payment terminal, a quick response code presented by a merchant, transmits payment information, and completes enabling.
(8) Device shadow: refers to virtual mapping of a device at a cloud, and is configured for recording a latest state and an expected state of the device. A device state may be managed and controlled at the cloud by using the device shadow.

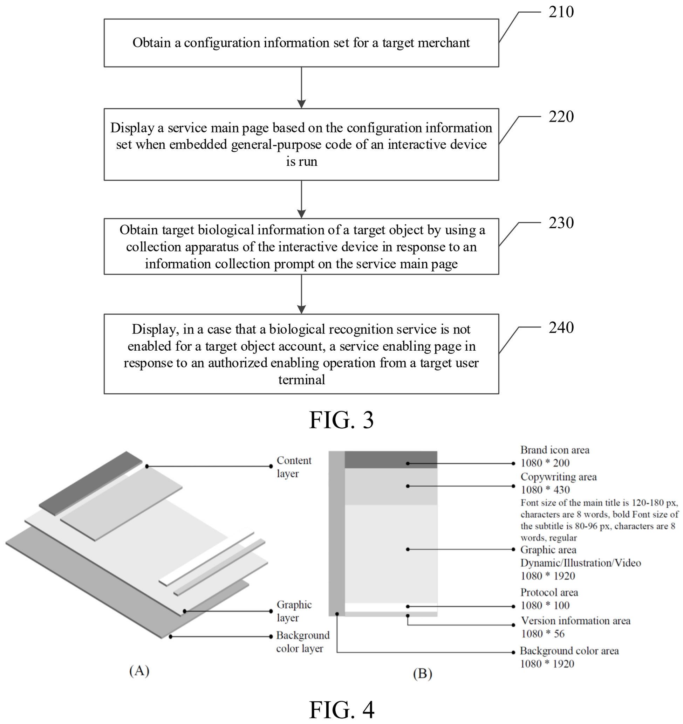

With reference to the foregoing description, the service processing method in this application is described below from the perspective of an interactive device. Referring to FIG. 3, the service processing method in this embodiment of this application may be independently completed by the interactive device, or may be completed in cooperation with a server. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application. The method of this application includes the following operations.

### 210: Obtain a configuration information set for a target merchant.

In one or more embodiments, the interactive device obtains the configuration information set for the target merchant, where the target merchant corresponds to a target merchant identifier, that is, the target merchant identifier is configured for uniquely identifying the target merchant. The configuration information set is used for configuring a service main page which is to be displayed on the interactive device, as described later in the specification. The merchant identifier may be a merchant number, a merchant refers to a business operator with a physical place of operation, for example, a convenience store, a gym, or a canteen, and the target merchant is a specific merchant. The target merchant may bind one or more interactive devices when settling in. In this application, one interactive device corresponding to the target merchant is used as an example for description. The interactive device corresponds to the target device identifier, and the target merchant may be bound to the interactive device by establishing a binding relationship between the target device identifier and the target merchant identifier. The target device identifier may be a device serial number (SN).

The interactive device may obtain the configuration information set for the target merchant in a plurality of manners. Specifically, in the first manner, the interactive device may obtain, from the server, the configuration information set that is inputted by the target merchant in advance. In the second manner, the interactive device communicates with a terminal device in a device to device (D2D) manner, and the terminal device directly transmits the configuration information set for the target merchant to the interactive device. In the third manner, a merchant type of the target merchant, a device type of the interactive device, and a service scenario type are used as an input to a configuration information recommendation model, and the configuration information set is outputted by using the configuration information recommendation model. The configuration information recommendation model may be a neural network model, or may be a rule mapping model.

For the third manner, it is assumed that the configuration information recommendation model is a neural network model, and the configuration information recommendation model needs to be trained in advance. Training data includes a merchant type (for example, a convenience store, a canteen, or a gym), a device type (for example, an integrated machine, an enabling machine, or a consumer machine), a service scenario type (for example, a payment service scenario, an access control service scenario, or a check-in service scenario), and actual configuration data. The merchant type, the device type, and the service scenario type are inputted as models, predicted configuration data is outputted by using the model, and the model is updated by using a loss between the actual configuration data and the predicted configuration data, until a model training condition is satisfied, so that the configuration information recommendation model can be obtained.

For the third manner, it is assumed that the configuration information recommendation model is a rule mapping model, a mapping relationship between a merchant type, a device type, a service scenario type, and configuration data may be set according to actual experience. For ease of understanding, referring to Table 1, Table 1 is an example of the rule mapping model.

**Table 1**

| Merchant type | Device type | Service scenario type | Main title text | Subtitle text | Color code |
|---|---|---|---|---|---|
| Convenience store | Integrated machine | Payment service scenario | Enable palm swiping | Palm swiping for payment | #FFFFFF |
| Convenience store | Consumer machine | Payment service scenario | Palm swiping payment | Please swipe your palm for payment | #FFFFFF |
| Gym | Integrated machine | Access control service scenario | Enable palm swiping | Palm swiping for gym | #A8A8A8 |
| Gym | Integrated machine | Check-in service scenario | Enable palm swiping | Palm swiping for check-in | #A8A8A8 |
| Canteen | Integrated machine | Payment service scenario | Enable palm swiping | Palm swiping for money deduction | #FFFFFF |
| Canteen | Consumer machine | Payment service scenario | Palm swiping payment | Please swipe your palm for money deduction | #FFFFFF |

The configuration information shown in Table 1 is merely an example. In an actual application, the configuration information may further include a poster link, an icon link, a dynamic effect image link, and the like. This is not limited herein.

220: Display a service main page based on the configuration information set when embedded general-purpose code of the interactive device is run.

The embedded general-purpose code is pre-written code, and the interactive device corresponds to a target merchant. In some embodiments, the interactive device has a target device identifier, and the target device identifier has a binding relationship with the target merchant identifier. The embedded general-purpose code includes a configuration field, and a configuration field value of the configuration field is assigned according to the configuration information set. In embodiments, the configuration information set includes the configuration field value. The configuration field value may include a parameter for customizing the display of the service main page. For example, the configuration field value includes a first value specifying the content to be displayed, such as, text, poster, image, video, audio, on the service main page, and/or a second value specifying a display manner of the content, such as a layout of display elements (such as, text, poster, image, video, audio) on the service main page, a background color of the service main page, a position of the text, poster, image, audio or video, and/or color/font of the text, and so on. The configuration field value may be comprised in the configuration information set, which is described in the following.

In one or more embodiments, the embedded general-purpose code may be written by a device manufacturer, and the interactive device writes in advance the embedded general-purpose code designed by the device manufacturer, that is, the target merchant does not need to additionally write related service code when purchasing the interactive device. The embedded general-purpose code includes a configuration field or interchangeably a configurable field, and a configuration field value of the configuration field is assigned according to the configuration information set. For example, it is assumed that a main title configuration field is "main _ title", the configuration information set includes a main title text, and the main title text is "enable palm swiping". Based on this, the main title text is used as a value of the main title configuration field, that is, "main _ title = enable palm swiping".

It can be learned that, each configuration in the configuration information set is used as a configuration field value, and when the embedded general-purpose code of the interactive device is run, a personalized page may be presented based on the configuration field value, that is, a service main page is presented. The service main page is configured for prompting information collection. The device manufacturer writes the embedded general-purpose code into a ROM of the interactive device. Therefore, there is no need to define a ROM for each service scenario, thereby reducing development and maintenance costs. The device manufacturer may be a device development engineer, or may be a device having an AI function. This is not limited herein.

230: Obtain target biological information of a target object by using a collection apparatus of the interactive device in response to an information collection prompt on the service main page.

The target object is corresponding to a target object account, and the target object account is an account logged in on a target user terminal.

In one or more embodiments, the target object (that is, a user) collects biological information based on the information collection prompt presented on the service main page. That is, the target biological information of the target object is collected by using a collection apparatus of the interactive device. The target biological information may be palm print information, face information, fingerprint information, iris information, vocal print information, or the like. This is not limited herein. When the biological information needs to be collected from an image dimension, the collection apparatus may be an image collection apparatus.

Specifically, the target object logs in to an application (for example, a payment application or a social application) on the target user terminal by using the target object account (for example, an OpenID, a mobile phone number, or an email address).

In this application, "in response to" indicates a condition or status on which an operation depends for being performed, and when the condition or status is satisfied, one or more operations may be performed. These operations may be real-time or may have a set delay.

240: Display, in a case that a biological recognition service is not enabled for the target object account, a service enabling page in response to an authorized enabling operation from the target user terminal, the service enabling page being configured for prompting that the biological recognition service is enabled, and the biological recognition service being configured for enabling performing a related service based on a biological information recognition result.

In one or more embodiments, after the target biological information is collected, the target biological information may be recognized. If it is recognized that the target biological information corresponds to the target object account, whether the target object account establishes a binding relationship with the target merchant identifier may be further detected.

For example, if the binding relationship is established between the target object account and the target merchant identifier, it indicates that the biological recognition service has been enabled for the target object account. Therefore, a related service (for example, a payment service, an access control service, or a check-in service) may be performed based on a target biological information recognition result.

For example, if the binding relationship is not established between the target object account and the target merchant identifier, it indicates that the biological recognition service is not enabled for the target object account. Therefore, after the target object performs an authorized enabling operation by using the target user terminal, the interactive device presents a service enabling page. The service enabling page is configured for prompting that the biological recognition service is enabled. The biological recognition service is configured for enabling performing a related service (such as a payment service, an access control service, or a check-in service) based on the biological information recognition result.

In this embodiment of this application, the device manufacturer writes the embedded general-purpose code into the interactive device, so that each interactive device uses the same set of embedded general-purpose code to run a related service. The merchant configures related information according to a requirement of a service scenario. Based on this, after accessing the interactive device, the merchant uses the configuration information as a configuration field value in the embedded general-purpose code. Therefore, not only a standardized framework can be provided based on the embedded general-purpose code to implement a service process, but also the merchant is able to perform personalized configuration based on the standardized framework. There is no need to spend much time and manpower on developing service code, thereby reducing development costs, and improving development efficiency and code maintainability.

In some embodiments, based on the foregoing embodiments corresponding to FIG. 3, in another exemplary embodiment provided in the embodiments of this application, the displaying a service main page based on the configuration information set when embedded general-purpose code of the interactive device is run may specifically include:
obtaining a main title text from the configuration information set;
when the embedded general-purpose code of the interactive device is run, displaying, in a copywriting area provided on the service main page, a main title corresponding to the main title text;
in a case that the configuration information set includes a subtitle text, when the embedded general-purpose code of the interactive device is run, displaying, in the copywriting area provided on the service main page, a subtitle corresponding to the subtitle text;
in a case that the configuration information set includes an icon link, when the embedded general-purpose code of the interactive device is run, displaying, in an icon area provided on the service main page, an icon corresponding to the icon link;
in a case that the configuration information set includes a dynamic effect image link, when the embedded general-purpose code of the interactive device is run, displaying, on the service main page, a dynamic effect image corresponding to the dynamic effect image link; and
in a case that the configuration information set includes color code, when the embedded general-purpose code of the interactive device is run, displaying, on the service main page, a background color corresponding to the color code.

In one or more embodiments, a manner of displaying the service main page based on the configuration information set is described. It can be learned from the foregoing embodiment that, the configuration information set includes at least the main title text, and may further include information such as the subtitle text, the icon link, the dynamic effect image link, and the color code. That is, the configuration field value may include any one or more of the above main title text, subtitle text, the icon link, the dynamic effect image link, and the color code as mentioned above. Based on the configuration information, a standardized service main page may be generated. A description is provided below in combination with the drawings.

Specifically, for ease of understanding, referring to FIG. 4, FIG. 4 is a schematic diagram of a standardized design of a service main page according to an embodiment of this application. As shown in picture (A) of FIG. 4, the service main page includes a content layer, a graphic layer, and a background color layer. As shown in picture (B) of FIG. 4, the content layer includes a brand icon area with a size of 1080 * 200. In a case that the configuration information set includes an icon link, an icon corresponding to the icon link is displayed in the brand icon area. The content layer includes a copywriting area with a size of 1080 * 430. In a case that the configuration information set includes a main title text, a main title corresponding to the main title text is displayed in the copywriting area, a font size of the main title is 120 pixels to 180 pixels, the font is bold, and a maximum quantity of supported characters is 8 words. In a case that the configuration information set includes a subtitle text, a subtitle corresponding to the subtitle text is displayed in the copywriting area. A font size of the subtitle is 80 pixels to 96 pixels, the font is regular, and a maximum quantity of supported characters is 8 words.

The graphic layer includes a graphic area with a size of 1080 * 1920. In a case that the configuration information set includes a dynamic effect image link, a dynamic effect image corresponding to the dynamic effect image link is displayed in the graphic area. A supported dynamic effect image format includes, but is not limited to, a portable animated graphics (PAG), a moving picture experts group 4 (MP4), an animated portable network graphics (APNG), and a joint photographic experts group (JEPG). The graphic layer further includes a protocol area with a size of 1080 * 100 and a version information area with a size of 1080 * 56.

The background color layer includes a background color area with a size of 1080 * 1920. In a case that the configuration information set includes color code, a background color corresponding to the color code is displayed in the graphic area. For example, when the color code is "#FFFFFF", the background color is pure white.

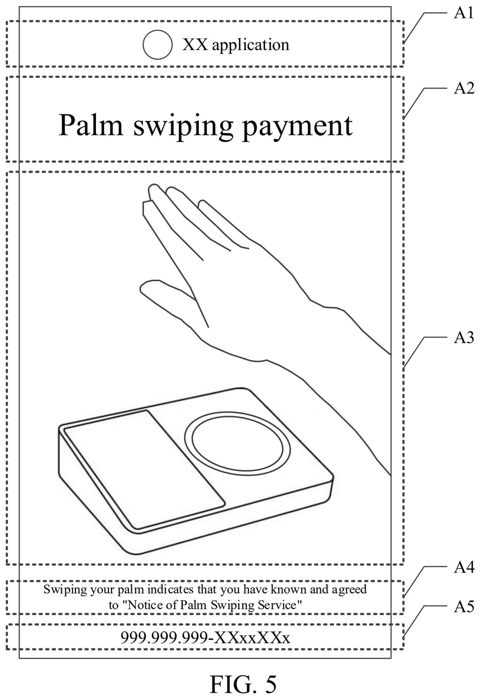

For example, referring to FIG. 5, FIG. 5 is a schematic diagram of a service main page according to an embodiment of this application. As shown in the figure, A1 indicates an icon. A2 indicates a main title. A3 indicates a dynamic effect image. A4 indicates a protocol. A5 indicates a version number of a biological recognition algorithm.

Next, in this embodiment of this application, the manner of displaying the service main page based on the configuration information set is provided. In the foregoing manner, page presentation can be standardized by maintaining the same set of embedded general-purpose code, and a capability of abstract multiplexing can be supported.

In some embodiments, based on the foregoing embodiments corresponding to FIG. 3, in another exemplary embodiment provided in the embodiments of this application, the displaying, in a case that a biological recognition service is not enabled for the target object account, a service enabling page in response to an authorized enabling operation from the target user terminal may specifically include:
displaying a code scanning enabling page in a case that the biological recognition service is not enabled for the target object account, the code scanning enabling page being configured for providing a child application code; and
displaying, in a case that the target user terminal scans the child application code, the service enabling page if the authorized enabling operation is triggered by using the target user terminal.

In one or more embodiments, a manner of authorizing service enabling based on a user-scan mode is described. It can be learned from the foregoing embodiment that if the biological recognition service is not enabled for the target object account, the target object is able to enable the biological recognition service. In this application, an example in which the target biological information is palm print information is used for description, that is, an example in which a palm swiping recognition service is enabled is used for description. In an actual application, another biological recognition application scenario is also supported. This is merely an example, and is not to be understood as a limitation to this application.

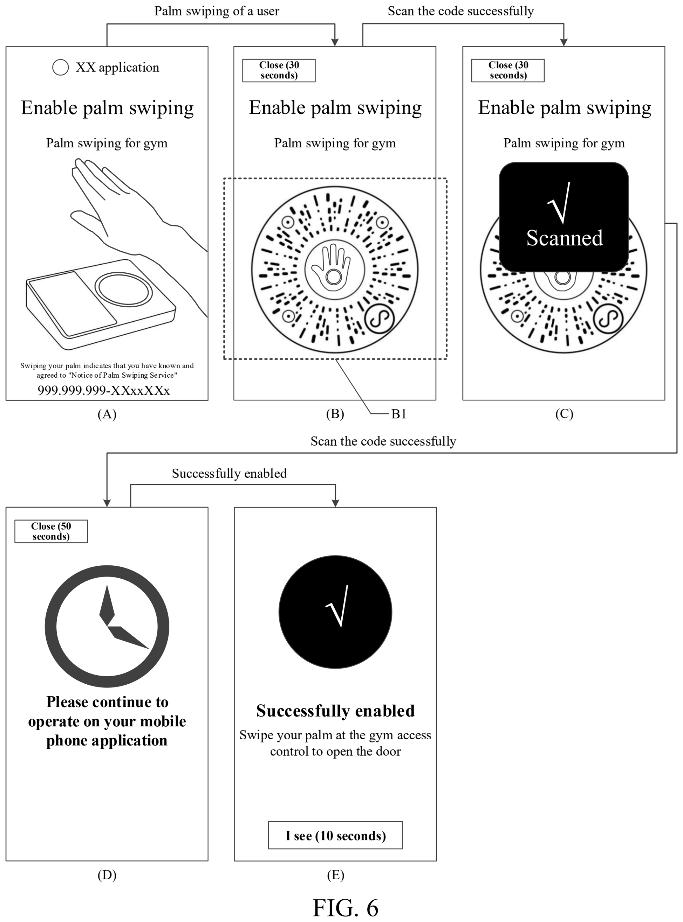

Specifically, for ease of understanding, referring to FIG. 6, FIG. 6 is a schematic diagram of enabling a biological recognition service based on a user-scan mode according to an embodiment of this application. As shown in a service main page in picture (A) of FIG. 6, a target object (that is, a user) may provide target biological information (that is, palm print information of the target object) for a background by using an image collection apparatus of an interactive device. In this case, a white light may be displayed around the image collection apparatus of the interactive device.

After the target biological information is successfully recognized, the interactive device displays a code scanning enabling page shown in picture (B) of FIG. 6. B1 indicates a child application code (for example, a mini program code). The child application code may be a quick response code, and by using a camera of a device to scan the child application code, a corresponding child application can be opened on the device. In the art, a child application is a relatively independent functional module that runs within a main application (usually called a host application). It is usually a core concept in the micro-frontend architecture. Each child application is responsible for implementing a specific function or service requirement. It can be independently developed, deployed, and maintained. In embodiments, the child application is corresponding to the biological recognition service, and the object can open the child application on the user terminal to enable the biological recognition service. In this case, a short green breathing light may be displayed around the image collection apparatus of the interactive device, and a voice of "Please scan to enable" is played. If the target object taps "Close control" or after a period of time (for example, 30 seconds), it returns to the service main page.

After the target object uses the target user terminal to scan the child application code indicated by B1, the interactive device displays a code scanning success page indicated in picture (C) of FIG. 6. In this case, the short green breathing light may be displayed around the image collection apparatus of the interactive device, and a voice of "Scan successfully, please continue to operate on your mobile phone" is played.

It jumps to a page shown in picture (D) of FIG. 6 in several seconds (for example, after one second) after scanning the code successfully. The page may be closed automatically within a period of time (for example, 50 seconds). If the target object taps "Close control", it returns to the service main page immediately. If the target object taps "Cancel control" in a child application of the target user terminal, the interactive device immediately returns to the service main page, and exits this enabling process. If the target object triggers the authorized enabling operation by using the target user terminal, a service enabling page shown in picture (E) of FIG. 6 is displayed. In this case, a voice "Successfully enabled" may be played.

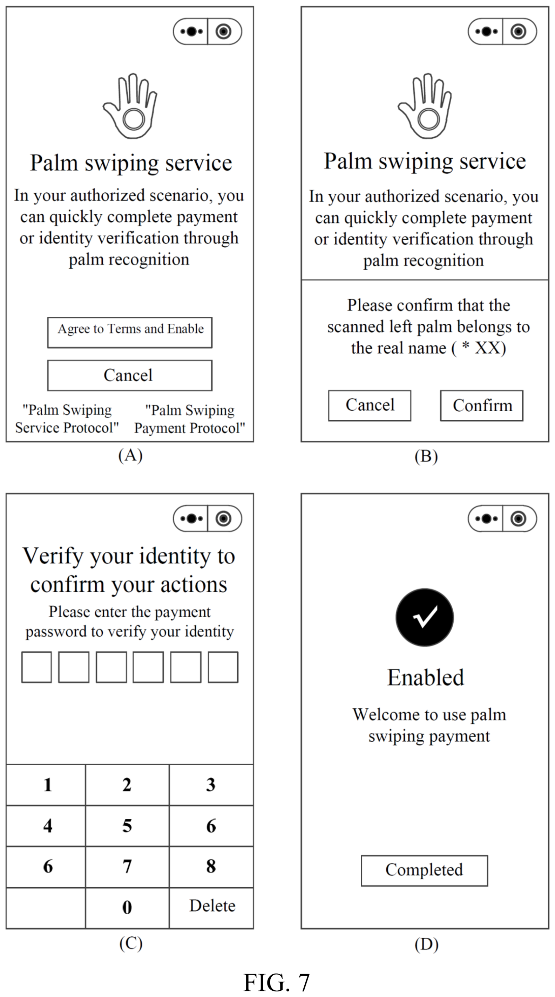

A process in which the target object triggers the authorized enabling operation by using the target user terminal is described below with reference to FIG. 7. Referring to FIG. 7, FIG. 7 is a schematic diagram of enabling a biological recognition service by a user by using a child application according to an embodiment of this application. After scanning a child application code, a target user terminal displays a child application enabling page shown in picture (A) of FIG. 7. After a control of "Agree and enable" is tapped, a security authorization page shown in picture (B) of FIG. 7 is displayed. After it is determined that palm print information belongs to the user, a "Confirm" control is tapped, and therefore, an identity verification page indicated in picture (C) of FIG. 7 is displayed. In this case, the target object may enter a payment password, and if the payment password is verified successfully, an enabled page indicated in picture (D) of FIG. 7 is displayed.

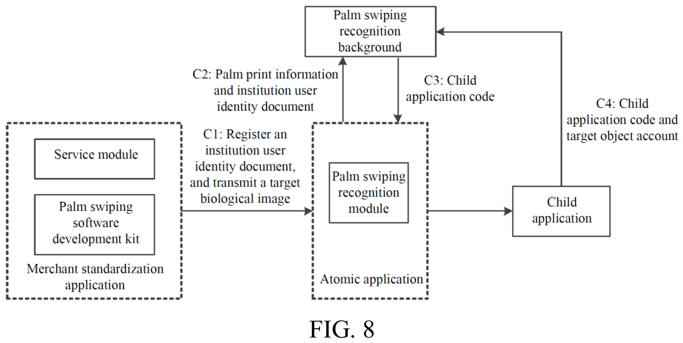

With reference to the foregoing example, referring to FIG. 8, FIG. 8 is a schematic flowchart of enabling a biological recognition service based on a user-scan mode according to an embodiment of this application. As shown in the figure, enabling a palm swiping recognition service is used as an example. Details are as follows.

In operation C1, a service module in the merchant standardization APP may register an institution user identity document (ID) for the target object. The institution user ID may be an employee account, an academic account, or the like. This is not limited herein. In a palm swiping recognition service related to a payment scenario, the institution user ID does not need to be collected.

In operation C3, after the merchant standardization APP preferably obtains a target biological image (that is, a palm image), palm print information in the target biological image (that is, the palm image) is extracted by using a palm swiping recognition module, and then the palm print information and the institution user ID are transmitted to a palm swiping recognition background. In some embodiments, if the institution user ID is not collected, the palm print information is sent.

In operation C4, after authentication is completed by using the palm swiping recognition background, the child application code is fed back to the interactive device for presentation.

In operation C5, the target object may actively scan the child application code by using a target user terminal, and authenticate a target object account. After the authentication is successful, a subsequent enabling procedure is completed.

Next, in this embodiment of this application, a manner of authorizing service enabling based on a user-scan mode is provided. In the foregoing manner, there are fewer operations of enabling the biological recognition service based on the user-scan mode, and therefore, enabling efficiency is high.

In some embodiments, based on the foregoing embodiments corresponding to FIG. 3, in another exemplary embodiment provided in the embodiments of this application, the obtaining target biological information of a target object by using a collection apparatus of the interactive device in response to an information collection prompt on the service main page may specifically include:
obtaining, in response to the information collection prompt on the service main page by using the collection apparatus of the interactive device, an enabling information code provided by the target user terminal;
obtaining the target biological information of the target object by using the collection apparatus of the interactive device in response to an authentication operation on the enabling information code; and
the displaying, in a case that a biological recognition service is not enabled for the target object account, a service enabling page in response to an authorized enabling operation from the target user terminal may specifically include:
   displaying a code scanning enabling page in a case that the biological recognition service is not enabled for the target object account, the code scanning enabling page being configured for providing a child application code; and
   displaying, in a case that the target user terminal scans the child application code, the service enabling page if the authorized enabling operation is triggered by using the target user terminal.

In one or more embodiments, a manner of authorizing service enabling based on a merchant-scan mode is described. It can be learned from the foregoing embodiment that if the biological recognition service is not enabled for the target object account, the target object is able to enable the biological recognition service. In this application, an example in which the target biological information is palm print information is used for description, that is, an example in which a palm swiping recognition service is enabled is used for description. In an actual application, another biological recognition application scenario is also supported. This is merely an example, and is not to be understood as a limitation to this application.

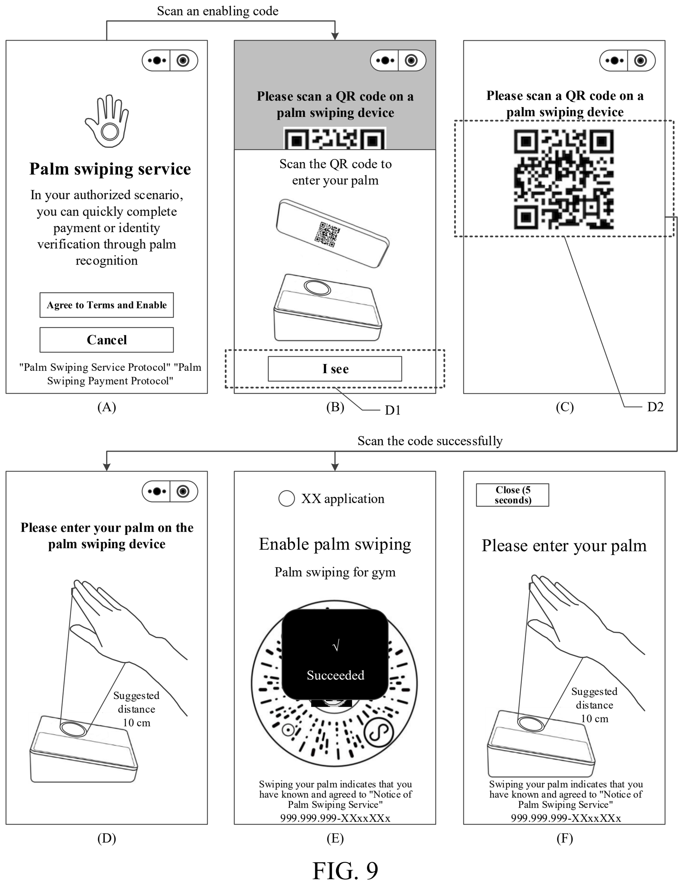

Specifically, for ease of understanding, referring to FIG. 9, FIG. 9 is a schematic diagram of enabling a biological recognition service based on a merchant-scan mode according to an embodiment of this application. As shown in picture (A) of FIG. 9, a child application enabling page on a target user terminal. After a control of "Agree and enable" is tapped, a prompt page shown in picture (B) of FIG. 9 is displayed. Based on this, after a control indicated by D1 is tapped, an information page shown in picture (C) of FIG. 9 is displayed. D2 indicates an enabling information code, and the enabling information code may carry an institution user ID (such as an academic account or an employee account). Therefore, the image collection apparatus of the interactive device may scan the enabling information code provided by the target user terminal. After scanning the code successfully, the target user terminal displays a page shown in picture (D) of FIG. 9, to prompt the user to enter biological information (for example, palm print information) by using the interactive device. In addition, after scanning the code successfully, the interactive device displays a page shown in picture (E) of FIG. 9, that is, prompts successful code scanning. After a period of time (for example, one second), the interactive device jumps to a page shown in picture (F) of FIG. 9, that is, prompts the user to enter biological information (for example, palm print information) by using the interactive device.

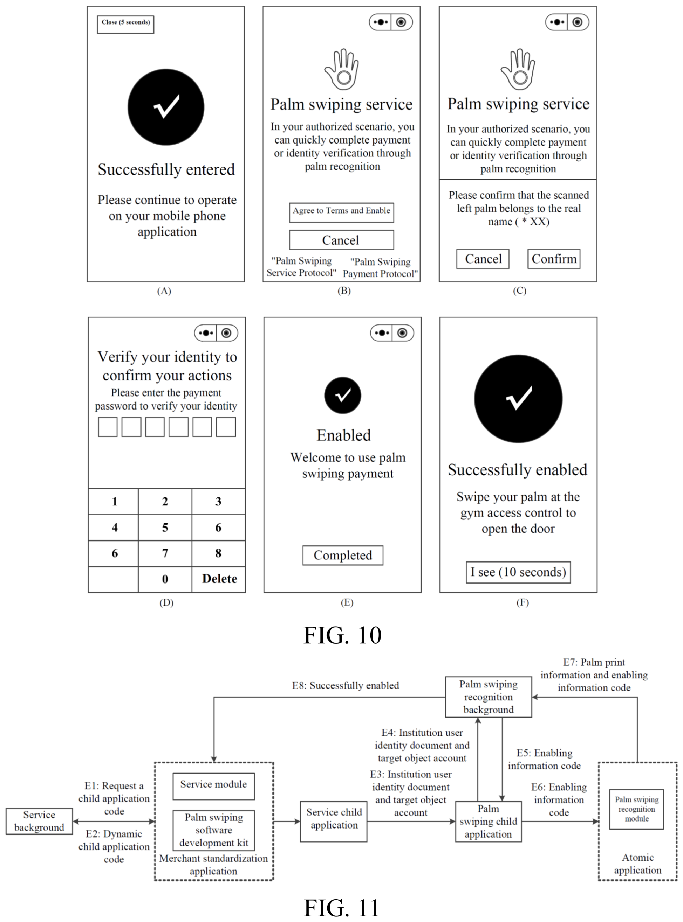

A process in which the target object triggers the authorized enabling operation by using the target user terminal is described below with reference to FIG. 10. Referring to FIG. 10, FIG. 10 is another schematic diagram of enabling a biological recognition service by a user by using a child application according to an embodiment of this application. After a target user enters target biological information (for example, palm print information of the target user), an interactive device displays a page shown in picture (A) of FIG. 10, that is, prompts that the biological information is successfully entered.

In addition, after scanning a child application code, the target user terminal displays a child application enabling page shown in picture (B) of FIG. 10. After a control of "Agree and enable" is tapped, the target user terminal displays a security authorization page shown in picture (C) of FIG. 10. After it is determined that palm print information belongs to the user, a "Confirm" control is tapped, and therefore, an identity verification page indicated in picture (D) of FIG. 10 is displayed on the target user terminal. In this case, the target object may enter a payment password, and if the payment password is verified successfully, an enabled page indicated in picture (E) of FIG. 10 is displayed on the target user terminal. In addition, the interactive device may display a service enabling page indicated in picture (F) of FIG. 10.

With reference to the foregoing example, referring to FIG. 11, FIG. 11 is a schematic flowchart of enabling a biological recognition service based on a merchant-scan mode according to an embodiment of this application. As shown in the figure, enabling a palm swiping recognition service is used as an example. Details are as follows.

In operation E1, a merchant standardization APP requests a service background to feed back the child application code.

In operation E2, the service background returns the child application code to the merchant standardization APP, and a target device identifier (for example, a device SN) of the interactive device is carried, to be presented to the user for code scanning and enabling.

In operation E3, a target object scans the child application code and opens a palm swiping child application, and transmits an institution user ID and a target object account to the palm swiping child application.

In operation E4, the palm swiping child application on the target user terminal transfers the institution user ID and the target object account to a palm swiping recognition background as authentication information.

In operation E5, the palm swiping recognition background generates an enabling information code, and transmits the enabling information code to the palm swiping child application on the target user terminal.

In operation E6, the target user terminal presents the enabling information code, and the interactive device scans the enabling information code and collects palm print information of the target object.

In operation E7, the interactive device transmits the enabling information code and the palm print information to the palm swiping recognition background.

In operation E8, the palm swiping recognition background feeds back, to the merchant standardization APP, a notification indicating that an enabling procedure is completed.

Next, in this embodiment of this application, a manner of authorizing service enabling based on a merchant-scan mode is provided. In the foregoing manner, security of enabling the biological recognition service based on the merchant-scan mode is high, and a misoperation is not easy to occur.

In some embodiments, based on the foregoing embodiments corresponding to FIG. 3, in another exemplary embodiment provided in the embodiments of this application, the obtaining target biological information of a target object by using an image collection apparatus of the interactive device in response to an information collection prompt on the service main page may further include:
performing, if the target biological information is successfully recognized, the operation of displaying, in a case that a biological recognition service is not enabled for the target object account, a service enabling page in response to an authorized enabling operation from the target user terminal; and
displaying a recognition denial pop-up window if the target biological information fails to be recognized, the recognition denial pop-up window being configured for prompting a failure of biological information recognition.

In one or more embodiments, a processing manner of refusing to enable a service is described. It can be learned from the foregoing embodiment that after the target biological information is collected, whether the target biological information can be recognized further needs to be determined. If the target biological information is successfully recognized, in a case that a biological recognition service is not enabled for the target object account, a service enabling page is displayed in response to an authorized enabling operation from the target user terminal. If the target biological information does not match an identity of an institution user ID, or the collected biological image is unclear (for example, excessively bright, excessively dark, or blurry), the target biological information cannot be extracted, it indicates that the target biological information fails to be recognized.

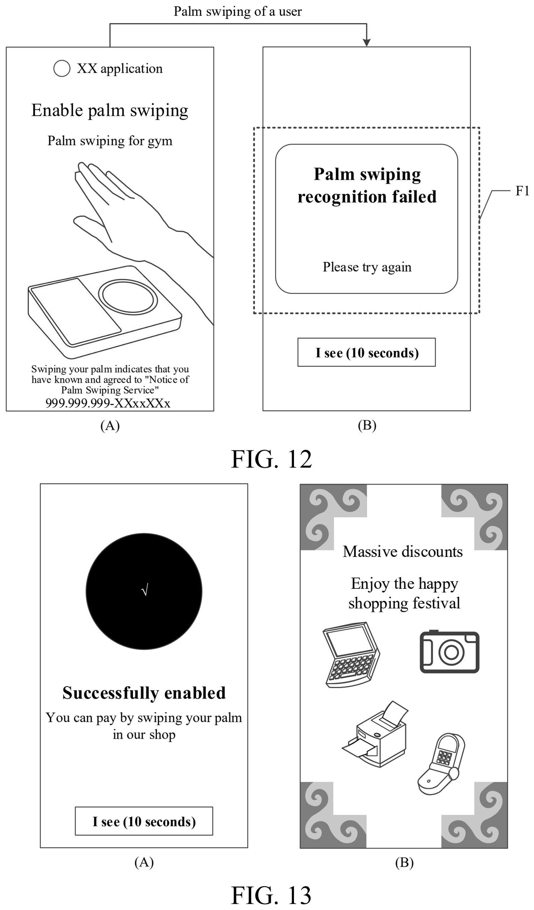

Specifically, an example in which a palm swiping recognition service is enabled is used for description. In an actual application, another biological recognition application scenario is also supported. This is merely an example, and is not to be understood as a limitation to this application. For ease of understanding, referring to FIG. 12, FIG. 12 is a schematic diagram of an interface on which a recognition denial pop-up window is displayed according to an embodiment of this application. As a service main page shown in picture (A) of FIG. 12, after a user swipes a palm, if target biological information fails to be recognized, a page shown in picture (B) of FIG. 12 is displayed. F1 indicates the recognition denial pop-up window, and it may be learned, by using information in the recognition denial pop-up window, that current biological information recognition fails.

Next, in this embodiment of this application, a processing manner of refusing to enable a service is provided. In the foregoing manner, for a case in which recognition fails, a recognition denial message can be provided for the user in time. Therefore, a case in which biological information is recognized for a long time can be avoided, thereby improving information collection efficiency.

In some embodiments, based on the foregoing embodiments corresponding to FIG. 3, in another exemplary embodiment provided in the embodiments of this application, after the displaying, in a case that a biological recognition service is not enabled for the target object account, a service enabling page in response to an authorized enabling operation from the target user terminal, the method may further include:
in a case that the configuration information set includes a poster link, when the embedded general-purpose code of the interactive device is run, displaying a poster picture corresponding to the poster link; and
in a case that the configuration information set includes an audio link, when the embedded general-purpose code of the interactive device is run, playing an audio file corresponding to the audio link.

In one or more embodiments, a manner in which the interactive device presents a specific page is described. It can be learned from the foregoing embodiment that, after displaying the service enabling page, the interactive device may further generate a standardized promotional page based on configuration information pre-entered by the merchant.

Specifically, for ease of understanding, referring to FIG. 13, FIG. 13 is a schematic diagram of an interface on which a poster picture is displayed according to an embodiment of this application. Picture (A) in FIG. 13 is the service enabling page displayed on the interactive device. Based on this, if the merchant preconfigures a poster link, after a control corresponding to "I know" is tapped, or after a period of time (for example, 10 seconds), the interactive device automatically jumps to a promotional page shown in picture (B) of FIG. 13. The promotional page presents a poster picture corresponding to the poster link. If the merchant preconfigures an audio link, when the promotional page is presented, the interactive device may further play a related voice, for example, "Massive discounts, welcome to buy".

Next, in this embodiment of this application, a manner in which the interactive device presents a specific page is provided. In the foregoing manner, the merchant may further enrich page presentation forms according to service requirements. In addition, based on a new architecture mode, time required for establishing a new service scenario can be reduced.

In some embodiments, based on the foregoing embodiments corresponding to FIG. 3, in another exemplary embodiment provided in the embodiments of this application, the obtaining target biological information of a target object by using an image collection apparatus of the interactive device in response to an information collection prompt on the service main page may further include:
displaying, if the target biological information is successfully recognized, service feedback information based on the configuration information set in a case that the biological recognition service is enabled for the target object account; and
displaying a recognition denial pop-up window if the information recognition result indicates that the target biological information fails to be recognized, the recognition denial pop-up window being configured for prompting a failure of biological information recognition.

In one or more embodiments, a manner of recognizing biological information is described. It can be learned from the foregoing embodiment that after the target biological information is collected, whether the target biological information can be recognized further needs to be determined. If the target biological information is successfully recognized, service feedback information is displayed based on the configuration information set in a case that the biological recognition service is enabled for the target object account. If the target biological information does not match an identity of an institution user ID, or the collected biological image is unclear (for example, excessively bright, excessively dark, or blurry), the target biological information cannot be extracted, it indicates that the target biological information fails to be recognized.

Specifically, an example in which a palm swiping recognition service is enabled is used for description. In an actual application, another biological recognition application scenario is also supported. This is merely an example, and is not to be understood as a limitation to this application. For ease of understanding, referring to FIG. 12 again. As a service main page shown in picture (A) of FIG. 12, after a user swipes a palm, if target biological information fails to be recognized, a page shown in picture (B) of FIG. 12 is displayed. The recognition denial pop-up window indicated by F1 is displayed on the page, and it may be learned, by using information in the recognition denial pop-up window, that current biological information recognition fails.

Next, in this embodiment of this application, a manner of recognizing biological information is provided. In the foregoing manner, if the biological recognition service is enabled for the target object account, the collected biological information may be recognized. In a case in which recognition fails, a recognition denial message can be provided for the user in time. Therefore, a case in which biological information is recognized for a long time can be avoided, thereby improving service processing efficiency.

In some embodiments, based on the foregoing embodiments corresponding to FIG. 3, in another exemplary embodiment provided in the embodiments of this application, the displaying service feedback information based on the configuration information set may specifically include:
transmitting payment information to a server in a case that the configuration information set includes a payment type identifier, the payment information indicating to deduct a payment amount from a transaction account corresponding to the target object account; and
displaying a payment inquiry page, the payment inquiry page being configured for prompting whether the payment amount is successfully deducted.

In one or more embodiments, a processing manner based on a payment service is described. It can be learned from the foregoing embodiment that the configuration information set may further include a service type identifier set by a merchant. Different service type identifiers are configured for supporting different service scenarios. Descriptions are provided below by using an example in which the service type identifier is a payment type identifier.

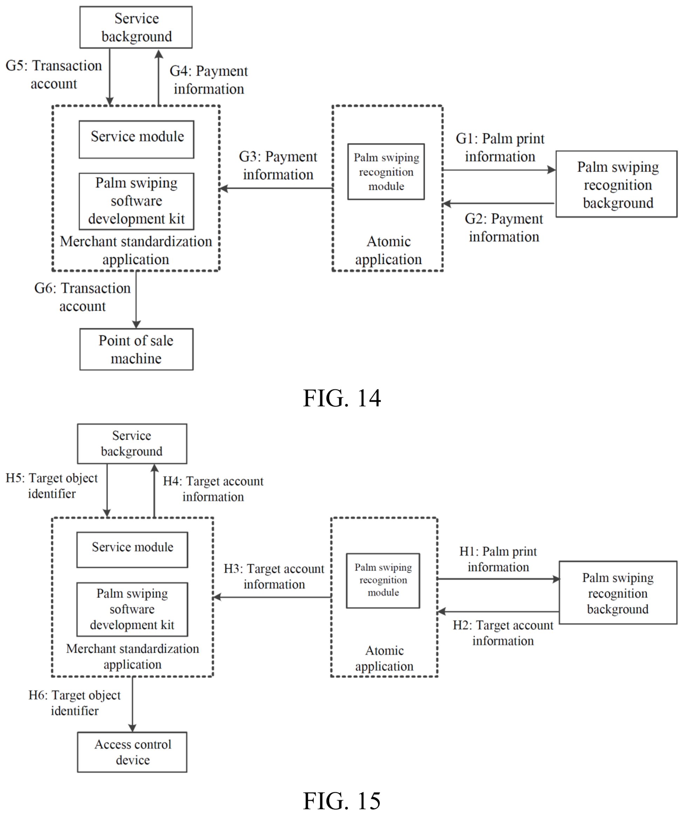

For example, a palm swiping recognition service is used as an example for description. In an actual application, another biological recognition service scenario is also supported. This is merely an example, and is not to be understood as a limitation to this application. For ease of understanding, referring to FIG. 14, FIG. 14 is a schematic flowchart of performing a payment service according to an embodiment of this application. As shown in the figure, details are as follows.

In operation G1, the atomic APP of the interactive device invokes a palm swiping recognition module to upload recognized palm print information to a palm swiping recognition background.

In operation G2, after performing one-to-many recognition, the palm swiping recognition background may return payment information to the atomic APP. The payment information includes target account information of the target object, and the target account information may be an OpenID. In addition, the payment information may further include information such as a payment amount.

In operation G3, the merchant standardization APP integrates a palm swiping SDK, and after completing cross-process communication with the atomic APP, may obtain the payment information and further complete a service logic.

In operation G4, a service module in the merchant standardization APP uses the obtained payment information as identification information and exchanges a payment account from a service background. The payment account may be an account of a payment application, a bank account, or the like.

In operation G5, the service background feeds back the payment account to the merchant standardization APP.

In operation G6, the merchant standardization APP communicates with a point of sale (POS) machine by using a transaction account, to complete a payment operation. After completing the payment operation, the interactive device may further display a payment inquiry page. The payment inquiry page is configured for prompting whether the payment amount is successfully deducted. Generally, the interactive device may poll a payment result, and presents the payment result if the order inquiry is needed.

Moreover, in this embodiment of this application, a processing manner based on a payment service is provided. In the foregoing manner, in a case that the biological recognition service is enabled for the target object account, the interactive device performs a standardized payment procedure based on information preconfigured by the merchant, to quickly hatch a new scenario and land.

In some embodiments, based on the foregoing embodiments corresponding to FIG. 3, in another exemplary embodiment provided in the embodiments of this application, the displaying service feedback information based on the configuration information set may specifically include:
transmitting the target object account to a server in a case that the configuration information set includes an access control type identifier, for the server to determine a target object identifier based on the target object account, the target object identifier being configured for uniquely representing an identifier of the target object in an organization, and the target object identifier having a binding relationship with the target object account; and
displaying an access control pass page in response to the target object identifier transmitted by the server, the access control pass page being configured for prompting that an access control device is opened.

In one or more embodiments, a processing manner based on an access control service is described. It can be learned from the foregoing embodiment that the configuration information set may further include a service type identifier set by a merchant. Different service type identifiers are configured for supporting different service scenarios. Descriptions are provided below by using an example in which the service type identifier is an access control type identifier.

For example, a palm swiping recognition service is used as an example for description. In an actual application, another biological recognition service scenario is also supported. This is merely an example, and is not to be understood as a limitation to this application. For ease of understanding, referring to FIG. 15, FIG. 15 is a schematic flowchart of performing an access control service according to an embodiment of this application. As shown in the figure, details are as follows.

In operation H1, the atomic APP of the interactive device invokes a palm swiping recognition module to upload recognized palm print information to a palm swiping recognition background.

In operation H2, after performing one-to-many recognition, the palm swiping recognition background may return target account information to the atomic APP. The target account information may be an OpenID.

In operation H3, the merchant standardization APP integrates a palm swiping SDK, and after completing cross-process communication with the atomic APP, may obtain the target account information and further complete a service logic.

In operation H4, a service module in the merchant standardization APP uses the obtained target account information as identification information and exchanges a target object identifier from a service background. The target object identifier may be an institution user ID (for example, an employee account or an academic account).

In operation H5, the service background feeds back the target object identifier to the merchant standardization APP.

In operation H6, the merchant standardization APP communicates with an access control device by using the target object identifier, to complete a door opening operation. After completing the door opening operation, the interactive device may further display an access control pass page. The access control pass page is configured for prompting that the access control device is opened, that is, access is available.

Moreover, in this embodiment of this application, a processing manner based on an access control service is provided. In the foregoing manner, in a case that the biological recognition service is enabled for the target object account, the interactive device performs a standardized access control start-up procedure based on information preconfigured by the merchant, to quickly hatch a new scenario and land.

In some embodiments, based on the foregoing embodiments corresponding to FIG. 3, in another exemplary embodiment provided in the embodiments of this application, the method may further include:
obtaining, in response to a version update request of a biological recognition algorithm, a current version number of the biological recognition algorithm;
obtaining, if the current version number is inconsistent with a latest version number of the biological recognition algorithm, algorithm configuration information corresponding to the latest version number; and
updating the biological recognition algorithm based on the algorithm configuration information, the updated biological recognition algorithm being configured for recognizing biological information of an object.

In one or more embodiments, a manner of updating the biological recognition algorithm is described. It can be learned from the foregoing embodiment that there is usually more than one version of the biological recognition algorithm. Therefore, there may be a case in which versions of the biological recognition algorithm are different. Based on this, in this application, because the service and the biological recognition service are decoupled, the biological recognition algorithm may be independently updated.

Specifically, when the version of the biological recognition algorithm is updated, the server may transmit a version update request to each interactive device. Based on this, each interactive device obtains a version number of a currently used biological recognition algorithm in response to the version update request, that is, obtains a current version number of the biological recognition algorithm. If the current version number of the biological recognition algorithm used by the interactive device is inconsistent with the latest version number of the biological recognition algorithm, it indicates that the biological recognition algorithm of the interactive device needs to be updated to the latest version. Based on this, the interactive device downloads, from the server, algorithm configuration information corresponding to the latest version number, and updates the biological recognition algorithm according to the algorithm configuration information. Therefore, the interactive device may recognize the biological information by using the updated biological recognition algorithm.

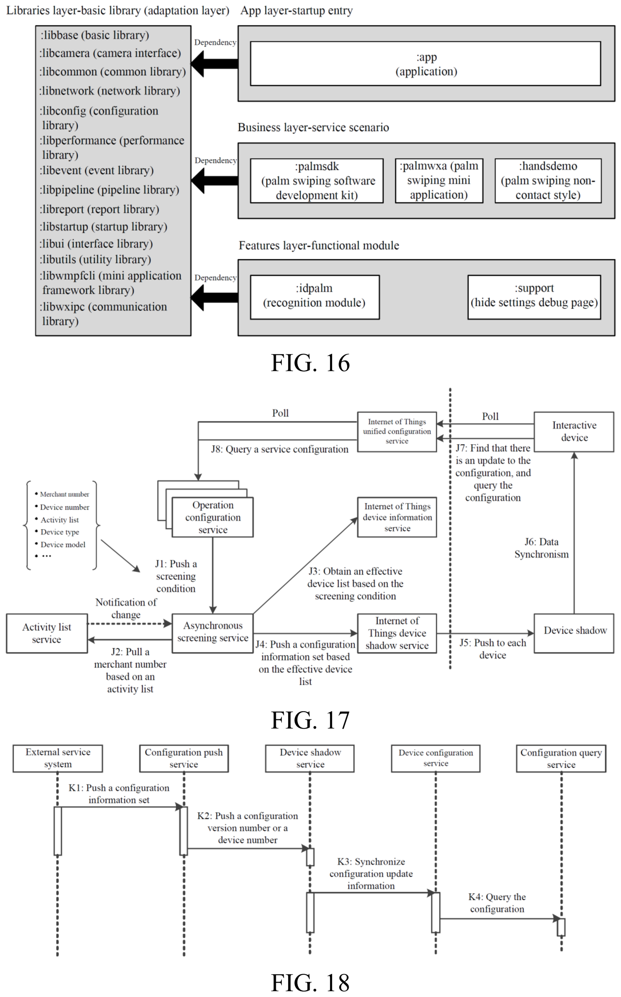

An architecture used in this application is cleaner and more lightweight, and has a clear engineering structure and dependency relationship. For ease of understanding, referring to FIG. 16, FIG. 16 is a schematic diagram of a standardized capability implementation framework of an interactive device according to an embodiment of this application. As shown in the figure, the standardized capability implementation framework of the interactive device mainly includes a libraries layer, an app layer, a business layer, and a feature layer. The foregoing four layers are separately described below.
(1) Libraries layer: configured for providing a basic library. There is only one-way dependency between layers from top to bottom, and modules in a layer cannot have a dependency relationship in principle. Some libraries (lib) in the libraries layer are more basic than other libs, and therefore, may be relied on by other libs, such as an event library (libevent) and a utility library (libutils).
(2) App layer: configured for providing a startup entry and carry an initialization logic. Application and StartupActivity occur at the app layer.
(3) Business layer: configured for providing a service scenario. In a non-SDK mode, a corresponding module may be selected for packaging based on a service scenario, and a module may be specified by using a product flavor (productFalvors).
(4) Feature layer: configured for providing a functional module. UI, such as a recognition module (: idpalm) and a debugging setting page (: support), is usually included.

Next, in this embodiment of this application, a manner of updating the biological recognition algorithm is provided. In the foregoing manner, in a case that the biological recognition algorithm is updated, an algorithm version may be independently updated, and developers in different service scenarios do not need to be connected. Therefore, differentiation between different service scenarios can be adapted, thereby reducing algorithm update costs.

In some embodiments, based on the foregoing embodiments corresponding to FIG. 3, in another exemplary embodiment provided in the embodiments of this application, the obtaining a configuration information set for a target merchant may specifically include:
receiving a first configuration information subset for the target merchant transmitted by the server, the first configuration information subset including M pieces of configuration information, and M being an integer greater than or equal to 1;
transmitting an information pulling request to the server, for the server to obtain a second configuration information subset based on the information pulling request, the second configuration information subset including N pieces of configuration information, and N being an integer greater than or equal to 1; and
receiving the second configuration information subset transmitted by the server, the second configuration information subset and the first configuration information subset belonging to the configuration information set.

In one or more embodiments, a manner in which the interactive device obtains the configuration information set is described. It can be learned from the foregoing embodiment that the interactive device needs to obtain the configuration information set for the target merchant. The configuration information set includes a first configuration information subset and a second configuration information subset. The first configuration information subset includes M pieces of configuration information with high real-time performance, for example, a service type identifier and a color code. The second configuration information subset includes N pieces of configuration information with low real-time performance or a large data amount, for example, a main title text, a subtitle text, an icon link, and a dynamic effect image link. Configuration information included in the first configuration information subset and the second configuration information subset is merely an example, and is not to be understood as a limitation on this application.

For ease of understanding, referring to FIG. 17, FIG. 17 is a schematic flowchart of delivering configuration information by a background according to an embodiment of this application. As shown in the figure, details are as follows.

In operation J1, an activity list service may notify that an activity list of an asynchronous push service changes. In this case, the background calls an operation configuration service to push a screening condition to the asynchronous push service. The screening condition includes, but is not limited to, a merchant number, a device number, an activity list (for example, an activity identifier and an activity version number), a device type, and a device model.

The "activity" herein usually refers to an "operation activity", for example, pushing a poster or a voice.

In operation J2, the asynchronous push service pulls, based on the activity list, a merchant number that participates in the activity.

In operation J3, the asynchronous push service obtains an effective device list based on the screening condition. The effective device list includes an interactive device identifier bound to a merchant number that participates in the activity.

In operation J4, the asynchronous push service pushes the first configuration information subset to an IoT device shadow service based on the effective device list. The first configuration information subset includes M pieces of configuration information.

In operation J5, the IoT device shadow service pushes the first configuration information subset to a device shadow corresponding to each interactive device.

In operation J6, the device shadow synchronizes the first configuration information subset to an interactive device corresponding to the first configuration information subset.

In operation J7, the interactive device may regularly poll an IoT unified configuration service, and when finding that there is an update to configuration information, the interactive device queries related configuration information through the IoT unified configuration service.

In operation J8, the IoT unified configuration service polls the operation configuration service based on an information pulling request initiated by the interactive device, that is, queries configuration information updated for a service, to obtain the second configuration information subset, the second configuration information subset including N pieces of configuration information. Based on this, the background feeds back the second configuration information subset to the interactive device.

Next, in this embodiment of this application, a manner in which the interactive device obtains the configuration information set is provided. In the foregoing manner, two message transfer manners, namely, active information pushing and passive information pulling, are combined, and a selection is performed according to an actual requirement. Therefore, in some cases, the server may actively push configuration information with high timeliness. In some other cases, the interactive device may pull configuration information that has a large data amount or that has a low requirement on real-time performance, thereby reducing pressure on the server.

In some embodiments, based on the foregoing embodiments corresponding to FIG. 3, in another exemplary embodiment provided in the embodiments of this application, the receiving a first configuration information subset for the target merchant transmitted by the server may specifically include:
receiving the first configuration information subset the target merchant transmitted by a cloud server, the first configuration information subset originating from a target device shadow, the target device shadow being stored in the cloud server, the target device shadow having a unique correspondence with the interactive device, and the first configuration information subset in the target device shadow being transmitted by the server to the cloud server;
the transmitting an information pulling request to the server, for the server to obtain a second configuration information subset based on the information pulling request may specifically include:
   transmitting the information pulling request to the cloud server, for the cloud server to obtain the second configuration information subset from the target device shadow based on the information pulling request, the second configuration information subset in the target device shadow being transmitted to the cloud server by the server; and
   the receiving the second configuration information subset transmitted by the server may specifically include:
      receiving the second configuration information subset for the target merchant transmitted by the cloud server.

In one or more embodiments, another manner in which the interactive device obtains the configuration information set is described. It can be learned from the foregoing embodiment that in the processes of actively pushing configuration information and passively pulling configuration information, a device shadow technology may further be used. The device shadow refers to a technology of creating a virtual device shadow on a cloud platform. The device shadow manages a status and an identifier of a device at a cloud, and may access the status of the device through the cloud.

For example, the server transmits the first configuration information subset of the target merchant to the cloud server, and creates a target device shadow corresponding to the interactive device on a cloud server end. Based on this, the target device shadow stores the first configuration information subset. Therefore, the interactive device may receive the first configuration information subset for the target merchant transmitted by the target device shadow.

For example, the server transmits the second configuration information subset of the target merchant to the cloud server, and creates a target device shadow corresponding to the interactive device on the cloud server end. Based on this, the target device shadow stores the second configuration information subset. In a case that the interactive device transmits the information pulling request to the cloud server, the target device shadow transmits, in response to the information pulling request, the second configuration information subset for the target merchant to the interactive device.

For ease of understanding, referring to FIG. 18, FIG. 18 is a schematic diagram of a working sequence of a service processing system according to an embodiment of this application. As shown in the figure, details are as follows.

In operation K1, an external service system pushes a configuration information set to a configuration push service.

In operation K2, the configuration push service pushes an application version number or a device number of an interactive device to a device shadow service.

In operation K3, the device shadow service and a device configuration service synchronously update configuration information.

In operation K4, the device configuration service queries updated configuration information from a configuration query service.

To further improve reliability and scalability of a push manner, for example, in this application, a load balancing mechanism may further be used to balance pressure at a server end. For example, a distributed message queue is used to implement message transmission. For example, in this application, a caching technology may further be used to improve a pushing speed and anti-concurrency capability. For example, a database is cached by using a remote dictionary server (Redis). For example, in this application, multi-computer room deployment may also be used to improve fault tolerance and availability of the system, for example, a cloud service that can be deployed across computer rooms is used.

Moreover, in this embodiment of this application, another manner in which the interactive device obtains the configuration information set is provided. In the foregoing manner, bidirectional communication between the interactive device and the cloud may be implemented by using the device shadow technology, and problems of an increasing quantity of devices that access and difficulty in device management may be resolved. In addition, an application programming interface (API) for interactive device management may also be provided for the server and a client.

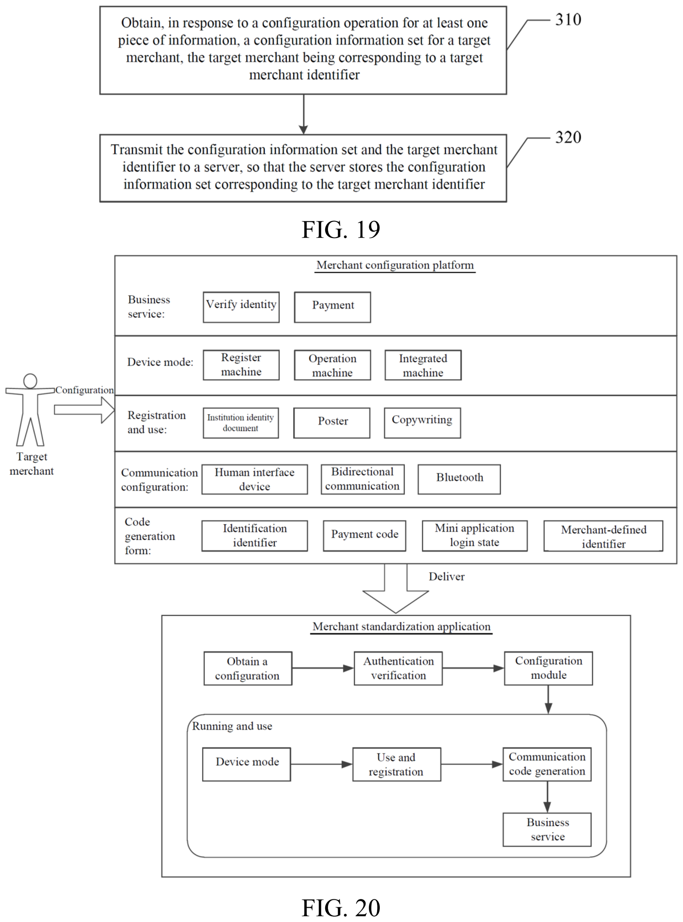

With reference to the foregoing description, the service processing method in this application is described below from the perspective of a terminal device. Referring to FIG. 19, the service processing method in this embodiment of this application may be independently completed by the terminal device, or may be completed by the terminal device in cooperation with the server. The method of this application includes the following operations.

310: Obtain, in response to a configuration operation for at least one piece of information, a configuration information set for a target merchant, the target merchant being corresponding to a target merchant identifier.

In one or more embodiments, the target merchant may perform a configuration operation on at least one piece of information of a service scenario by using a terminal device (for example, a computer or a mobile phone). For example, the target merchant sets a configuration information set for a payment service scenario. For another example, the target merchant sets a configuration information set for an access control service scenario. The target merchant corresponds to a target merchant identifier, and the target merchant identifier is configured for uniquely identifying the target merchant.

Specifically, for ease of understanding, referring to Table 2, Table 2 is an example of configurable content of a merchant.

**Table 2**

| Configuration module | Configuration item | Configuration value | Related description |
|---|---|---|---|
| Enabling procedure | Enabling manner | (1) User-scan; | (1) User-scan (applicable to a scenario such as in-store payment); |
| | | (2) Merchant-scan; | (2) Merchant-scan (applicable to a scenario such as a campus and a canteen); |
| | Open a main page | Merchant information presentation, and a poster, audio, a mini program, and the like may be separately configured; | Different merchants may use different mini programs for jumping, and if the merchant has a mini program and a service requirement of jumping, a biological recognition service mini program can be connected, to complete the jump between mini programs; |
| Recognition procedure | Recognition procedure | Recognition denial enabling, and recognition denial pop-up window | Access control and canteen enabling, and recognition denial enabling and recognition denial pop-up window both exist; |
| | Recognition success page | Merchant information presentation, and a poster, audio, and the like may be separately configured | Present after successful recognition |
| | Order inquiry page | Whether configuration is needed; | Whether order inquiry is needed; |
| | Code generation content | (1) OpenID; | The same institution may have a plurality of returning requirements; |
| | | (2) Institution user identity document; | |
| | | (3) Payment code; | |
| | | (4) Login state; | |
| | | (5) Other additional scenarios; | |
| | Code generation manner | Bidirectional communication, a human interface device (HID), and the like; | The bidirectional communication refers to that a device and a POS machine may communicate with each other. |
| | | | HID is unidirectional communication; |
| Type of whole machine | Running mode | (1) Integrated machine; | The background delivers a configuration, and the device provides a default configuration; |
| | | | (1) The integrated machine can be configured for consuming and enabling; |
| | | (2) Enabling machine; | |
| | | (3) Consumer machine; | (2) The enabling machine is only configured for enabling; |
| | | | (3) The consumer machine is only configured for consuming; |

It can be seen from Table 2 that the target merchant may configure related configuration items of an enabling procedure and a recognition procedure for different service scenario configurations.

320: Transmit the configuration information set and the target merchant identifier to a server, so that the server stores the configuration information set corresponding to the target merchant identifier, the foregoing embodiments being implemented in a case that an interactive device obtains the configuration information set from the server.

In one or more embodiments, after the target merchant completes the configuration, the configuration information set and the target merchant identifier are transmitted to the server. The server stores a mapping relationship between the target merchant identifier and the configuration information set. Based on this, after the interactive device is bound to the target merchant, the interactive device may obtain the configuration information set from the server based on the target merchant identifier, and perform the enabling procedure and the recognition procedure.

Specifically, in a standard LPOS mode, merchants in different institutions may have different enabling procedures and recognition procedures. Based on this, the target merchant is used as an example. Based on a binding relationship between the target device identifier (for example, an SN) of the interactive device and the target merchant identifier, the configuration information set corresponding to the target merchant identifier may be delivered to the interactive device corresponding to the target device identifier. Therefore, the interactive device may present a corresponding UI and a corresponding procedure.

For ease of understanding, referring to FIG. 20, FIG. 20 is a schematic diagram of a standardized configuration design according to an embodiment of this application. As shown in the figure, a target merchant may configure a business service, a device mode, registration and use, a communication configuration, and a code generation form by using a merchant configuration platform on a terminal device. After configuration is completed, the generated configuration information set is delivered to a merchant standardization APP of the interactive device. Based on this, the interactive device performs authentication verification based on the obtained configuration information set. After the verification succeeds, a corresponding configuration is performed for running and use. During running and use, first, a device mode is determined. The interactive device in this application uses a device mode of "integrated machine". Then, a target object may perform an authorized enabling operation by using a target user terminal. After registration is completed, the interactive device may perform communication code generation in a service procedure, and perform a corresponding business service.

In embodiments of this application, a service processing method is provided. In the foregoing manner, a device manufacturer writes the embedded general-purpose code into the interactive device, so that each interactive device uses the same set of embedded general-purpose code to run a related service. The merchant configures related information according to a requirement of a service scenario. Based on this, after accessing the interactive device, the merchant uses the configuration information as a configuration field value in the embedded general-purpose code. Therefore, not only a standardized framework can be provided based on the embedded general-purpose code to implement a service process, but also the merchant is able to perform personalized configuration based on the standardized framework. There is no need to spend much time and manpower on developing service code, thereby reducing development costs, and improving development efficiency and code maintainability.

In some embodiments, based on the foregoing embodiments corresponding to FIG. 19, in another exemplary embodiment provided in the embodiments of this application, the obtaining, in response to a configuration operation for at least one piece of information, a configuration information set for a target merchant may specifically include:
obtaining a main title text in response to an input operation on a main title input box, the main title text belonging to the configuration information set;
obtaining a subtitle text in response to an input operation on a subtitle input box, the subtitle text belonging to the configuration information set;
obtaining an icon link in response to an uploading operation for an icon, the icon link belonging to the configuration information set, and the icon link indicating a storage address of the icon;
obtaining a dynamic effect image link in response to an upload operation for a dynamic effect image, the dynamic effect image link belonging to the configuration information set, and the dynamic effect image link indicating a storage address of the dynamic effect image; and
obtaining a color code in response to a selection operation for a background color, the color code belonging to the configuration information set, and the color code indicating the background color.

In one or more embodiments, a manner of supporting a merchant in configuring service related information is described. It can be learned from the foregoing embodiment that, the configuration information set of the target merchant may include a main title text, a subtitle text, an icon link, a dynamic effect image link, a color code, and the like.

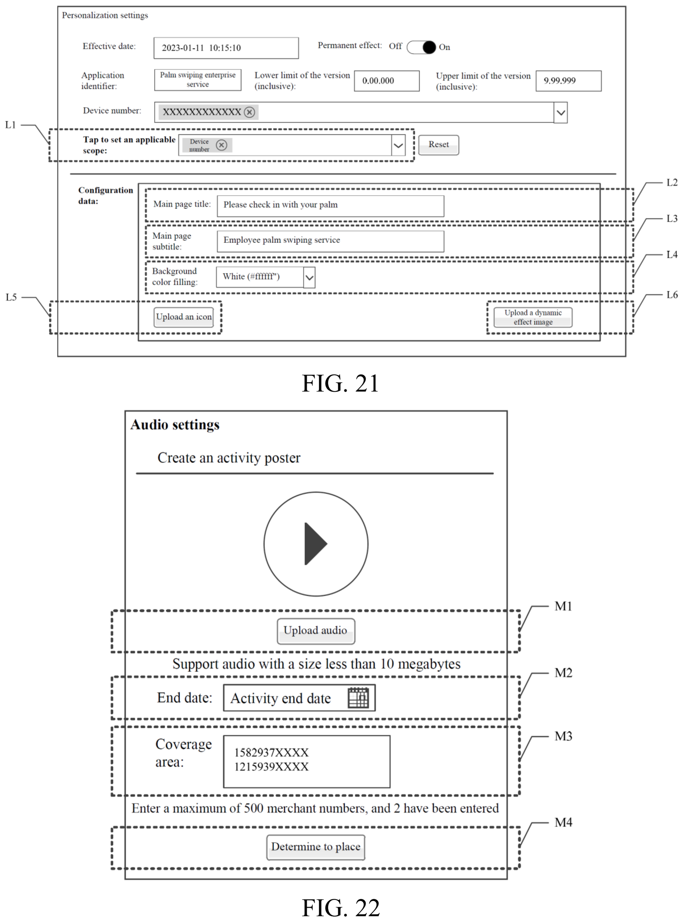

Specifically, for ease of understanding, referring to FIG. 21, FIG. 21 is a schematic diagram of configuring related information based on a merchant configuration platform according to an embodiment of this application. As shown in the figure, in a personalized configuration, a merchant (for example, a target merchant) may configure a start time at which a service is effective, an application identifier, a version upper limit, a version lower limit, a device number, and the like.

When a user taps an applicable scope configuration box indicated by L1, an applicable scope of the configuration information may be set. In FIG. 21, "device number" is used as the applicable scope of the configuration information. In an actual application, the applicable scope may further include a merchant number, a sub-merchant number, an operating system, an application use scenario, an activity list identifier, and the like. This is not limited herein.

L2 indicates a main title input box. A main title text may be inputted in the main title input box indicated by L2. For example, the main title text is "Please check in with your palm".

L3 indicates a subtitle input box. A subtitle text may be inputted into the subtitle input box indicated by L3. For example, the subtitle text is "Employee palm swiping service".

L4 indicates a background color selection control. After the background color selection control indicated by L4 is tapped, a color may be selected as a background color. For example, pure white is selected as the background color, that is, a color code corresponding to the pure white is "#FFFFFF".

L5 indicates an icon uploading control. After the icon uploading control indicated by L5 is tapped, an icon may be selected to perform an uploading operation. After uploading is completed, an icon link corresponding to the icon is generated.

L6 indicates a dynamic effect image uploading control. After the dynamic effect image uploading control indicated by L6 is tapped, a dynamic effect image may be selected to perform an uploading operation. After uploading is completed, a dynamic effect image link corresponding to the dynamic effect image is generated.

Full compiling or incremental compiling may be performed on embedded general-purpose code based on information configured by the merchant. It is tested that the full compiling takes approximately one minute, and the incremental compiling takes approximately 30 seconds. Therefore, a compilation time may be shortened.

Next, in this embodiment of this application, a manner of supporting a merchant in configuring service related information is provided. In the foregoing manner, a merchant is able to customize configuration information, and has a good configuration capability, to satisfy a personalized requirement of the merchant, so that online operation is more flexible.

In some embodiments, based on the foregoing embodiments corresponding to FIG. 19, in another exemplary embodiment provided in the embodiments of this application, the obtaining, in response to a configuration operation for at least one piece of information, a configuration information set for a target merchant may specifically include:
obtaining a poster link in response to an upload operation for a poster picture, the poster link belonging to the configuration information set, and the poster link indicating a storage address of the poster picture; and
obtaining an audio link in response to an upload operation for an audio file, the audio link belonging to the configuration information set, and the audio link indicating a storage address of the audio file.

In one or more embodiments, a manner of supporting a merchant in uploading a poster and audio is described. It can be learned from the foregoing embodiment that, the configuration information set of the target merchant may further include a poster link of a poster picture, an audio link of an audio file, and the like. That is, the target merchant may upload a poster picture and an audio file.

For example, for ease of understanding, referring to FIG. 22, FIG. 22 is a schematic diagram of configuring an audio file based on a merchant configuration platform according to an embodiment of this application. As shown in the figure, M1 indicates an audio upload control. After the audio upload control indicated by M1 is tapped, an audio file may be selected for uploading, thereby triggering an upload operation for the audio file. The background generates a corresponding audio link based on the uploaded audio file. The audio link indicates a storage address of the audio file. M2 is an input box indicating an end date, that is, a date at which an audio file is ineffective may be selected. M3 is an input box indicating a coverage area, that is, a merchant number playing the audio file may be inputted. After the setting is completed, if a placement control indicated by M4 is tapped, placement of the audio file is completed.

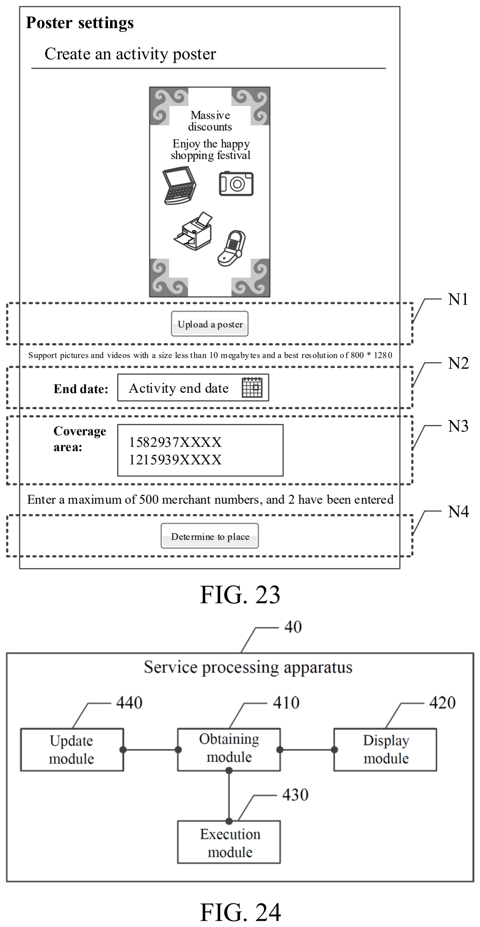

For example, for ease of understanding, referring to FIG. 23, FIG. 23 is a schematic diagram of configuring a poster file based on a merchant configuration platform according to an embodiment of this application. As shown in the figure, N1 indicates a poster uploading control. After the poster uploading control indicated by N1 is tapped, a poster picture may be selected for uploading, thereby triggering an uploading operation for the poster picture. The background generates a corresponding poster link based on the uploaded poster picture. The poster link indicates a storage address of the poster picture. N2 is an input box indicating an end date, that is, a date at which a poster picture is ineffective may be selected. N3 is an input box indicating a coverage area, that is, a merchant number presenting the poster picture may be inputted. After the setting is completed, if a placement control indicated by N4 is tapped, placement of the poster picture is completed.

Next, in this embodiment of this application, a manner of supporting a merchant in uploading a poster and audio is provided. In the foregoing manner, a merchant is able to customize multimedia information such as a poster and audio, thereby not only satisfying a personalized requirement of the merchant, but also improving flexibility and richness of online operations.

A data processing apparatus, alternatively referred to as a service processing apparatus, in this application is described below in detail. Referring to FIG. 24, FIG. 24 is a schematic diagram of a service processing apparatus according to an embodiment of this application. The service processing apparatus 40 includes:
an obtaining module 410, configured to obtain a configuration information set for a merchant; and
a display module 420, configured to display the service main page based on the configuration information set when embedded general-purpose code of an interactive device is run, the embedded general-purpose code being pre-written code, the embedded general-purpose code including a configuration field, and the a configuration field value of the configuration field being assigned according to the configuration information set;
the obtaining module 410 being further configured to obtain target biological information of a target object by using a collection apparatus of the interactive device in response to an information collection prompt on the service main page, the target object being corresponding to a target object account, and the target object account being an account logged on in a target user terminal; and
the display module 420 being further configured to display, in a case that a biological recognition service is not enabled for the target object account, a service enabling page in response to an authorized enabling operation from the target user terminal, the service enabling page being configured for prompting that the biological recognition service is enabled, and the biological recognition service being configured for enabling performing a related service based on a biological information recognition result.

In an embodiment of this application, a service processing apparatus is provided. In the foregoing apparatus, a device manufacturer writes the embedded general-purpose code into the interactive device, so that each interactive device uses the same set of embedded general-purpose code to run a related service. The merchant configures related information according to a requirement of a service scenario. Based on this, after accessing the interactive device, the merchant uses the configuration information as a configuration field value in the embedded general-purpose code. Therefore, not only a standardized framework can be provided based on the embedded general-purpose code to implement a service process, but also the merchant is able to perform personalized configuration based on the standardized framework. There is no need to spend much time and manpower on developing service code, thereby reducing development costs, and improving development efficiency and code maintainability.

In some embodiments, based on the embodiment corresponding to FIG. 24, in another embodiment of the service processing apparatus 40 provided in this embodiment of this application, including:
the display module 420 being specifically configured to: obtain a main title text from a configuration information set;
when the embedded general-purpose code of the interactive device is run, display, in a copywriting area provided on the service main page, a main title corresponding to the main title text;
in a case that the configuration information set includes a subtitle text, when the embedded general-purpose code of the interactive device is run, display, in the copywriting area provided on the service main page, a subtitle corresponding to the subtitle text;
in a case that the configuration information set includes an icon link, when the embedded general-purpose code of the interactive device is run, display, in an icon area provided on the service main page, an icon corresponding to the icon link;
in a case that the configuration information set includes a dynamic effect image link, when the embedded general-purpose code of the interactive device is run, display, on the service main page, a dynamic effect image corresponding to the dynamic effect image link; and
in a case that the configuration information set includes color code, when the embedded general-purpose code of the interactive device is run, display, on the service main page, a background color corresponding to the color code.

In an embodiment of this application, a service processing apparatus is provided. In the foregoing apparatus, page presentation can be standardized by maintaining the same set of embedded general-purpose code, and a capability of abstract multiplexing can be supported.

In some embodiments, based on the embodiment corresponding to FIG. 24, in another embodiment of the service processing apparatus 40 provided in this embodiment of this application:
the display module 420 is specifically configured to: display a code scanning enabling page in a case that the biological recognition service is not enabled for the target object account, the code scanning enabling page being configured for providing a child application code; and
display, in a case that the target user terminal scans the child application code, the service enabling page if the authorized enabling operation is triggered by using the target user terminal.

In an embodiment of this application, a service processing apparatus is provided. In the foregoing apparatus, there are fewer operations of enabling the biological recognition service based on the user-scan mode, and therefore, enabling efficiency is high.

In some embodiments, based on the embodiment corresponding to FIG. 24, in another embodiment of the service processing apparatus 40 provided in this embodiment of this application, including:
the obtaining module 410 being specifically configured to: obtain, by using the collection apparatus of the interactive device, an enabling information code provided by the target user terminal; and
obtain the target biological information of the target object by using the collection apparatus of the interactive device in response to an authentication operation on the enabling information code; and
the display module 420 being specifically configured to: display a code scanning enabling page in a case that the biological recognition service is not enabled for the target object account, the code scanning enabling page being configured for providing a child application code; and
display, in a case that the target user terminal scans the child application code, the service enabling page if the authorized enabling operation is triggered by using the target user terminal.

In an embodiment of this application, a service processing apparatus is provided. In the foregoing apparatus, security of enabling the biological recognition service based on the merchant-scan mode is high, and a misoperation is not easy to occur.

In some embodiments, based on the embodiment corresponding to FIG. 24, in another embodiment of the service processing apparatus 40 provided in this embodiment of this application, the service processing apparatus 40 further includes an execution module 430;
the execution module 430 is configured to: after the obtaining of the target biological information of the target object by using the collection apparatus of the interactive device in response to the information collection prompt on the service main page, perform, if the target biological information is successfully recognized, the operation of displaying, in a case that a biological recognition service is not enabled for the target object account, a service enabling page in response to an authorized enabling operation from the target user terminal; and
the display module 420 is further configured to display a recognition denial pop-up window if the target biological information fails to be recognized, the recognition denial pop-up window being configured for prompting a failure of biological information recognition.

In an embodiment of this application, a service processing apparatus is provided. In the foregoing apparatus, for a case in which recognition fails, a recognition denial message can be provided for the user in time. Therefore, a case in which biological information is recognized for a long time can be avoided, thereby improving information collection efficiency.

In some embodiments, based on the embodiment corresponding to FIG. 24, in another embodiment of the service processing apparatus 40 provided in this embodiment of this application, including:
the display module 420 being further configured to: after the displaying, in a case that a biological recognition service is not enabled for the target object account, of a service enabling page in response to an authorized enabling operation from the target user terminal, in a case that the configuration information set includes a poster link, when the embedded general-purpose code of the interactive device is run, display a poster picture corresponding to the poster link; and
the display module 420 being further configured to: in a case that the configuration information set includes an audio link, when the embedded general-purpose code of the interactive device is run, play an audio file corresponding to the audio link.

In an embodiment of this application, a service processing apparatus is provided. In the foregoing apparatus, the merchant may further enrich page presentation forms according to service requirements. In addition, based on a new architecture mode, time required for establishing a new service scenario can be reduced.

In some embodiments, based on the embodiment corresponding to FIG. 24, in another embodiment of the service processing apparatus 40 provided in this embodiment of this application, including:
the display module 420 being further configured to: display, if the target biological information is successfully recognized, service feedback information based on the configuration information set in a case that the biological recognition service is enabled for the target object account; and
the display module 420 being further configured to display a recognition denial pop-up window if the information recognition result indicates that the target biological information fails to be recognized, the recognition denial pop-up window being configured for prompting a failure of biological information recognition.

In an embodiment of this application, a service processing apparatus is provided. In the foregoing apparatus, if the biological recognition service is enabled for the target object account, the collected biological information may be recognized. In a case in which recognition fails, a recognition denial message can be provided for the user in time. Therefore, a case in which biological information is recognized for a long time can be avoided, thereby improving service processing efficiency.

In some embodiments, based on the embodiment corresponding to FIG. 24, in another embodiment of the service processing apparatus 40 provided in this embodiment of this application, including:
the display module 420 being specifically configured to: transmit payment information to a server in a case that the configuration information set includes a payment type identifier, the payment information indicating to deduct a payment amount from a transaction account corresponding to the target object account; and
display a payment inquiry page, the payment inquiry page being configured for prompting whether the payment amount is successfully deducted.

In an embodiment of this application, a service processing apparatus is provided. In the foregoing apparatus, in a case that the biological recognition service is enabled for the target object account, the interactive device performs a standardized payment procedure based on information preconfigured by the merchant, to quickly hatch a new scenario and land.

In some embodiments, based on the embodiment corresponding to FIG. 24, in another embodiment of the service processing apparatus 40 provided in this embodiment of this application, including:
the display module 420 being specifically configured to: transmit the target object account to a server in a case that the configuration information set includes an access control type identifier, for the server to determine a target object identifier based on the target object account, the target object identifier being configured for uniquely representing an identifier of the target object in an organization, and the target object identifier having a binding relationship with the target object account; and
display an access control pass page in response to the target object identifier transmitted by the server, the access control pass page being configured for prompting that an access control device is opened.

In an embodiment of this application, a service processing apparatus is provided. In the foregoing apparatus, in a case that the biological recognition service is enabled for the target object account, the interactive device performs a standardized access control start-up procedure based on information preconfigured by the merchant, to quickly hatch a new scenario and land.

In some embodiments, based on the embodiment corresponding to FIG. 24, in another embodiment of the service processing apparatus 40 provided in this embodiment of this application, the service processing apparatus 40 further includes an update module 440;
the obtaining module 410 is further configured to obtain, in response to a version update request of a biological recognition algorithm, a current version number of the biological recognition algorithm;
the obtaining module 410 is further configured to obtain, if the current version number is inconsistent with a latest version number of the biological recognition algorithm, algorithm configuration information corresponding to the latest version number; and
the update module 440 is configured to update the biological recognition algorithm based on the algorithm configuration information, the updated biological recognition algorithm being configured for recognizing biological information of an object.

In an embodiment of this application, a service processing apparatus is provided. In the foregoing apparatus, in a case that the biological recognition algorithm is updated, an algorithm version may be independently updated, and developers in different service scenarios do not need to be connected. Therefore, differentiation between different service scenarios can be adapted, thereby reducing algorithm update costs.

In some embodiments, based on the embodiment corresponding to FIG. 24, in another embodiment of the service processing apparatus 40 provided in this embodiment of this application, including:
the obtaining module 410 being specifically configured to: receive a first configuration information subset for the target merchant transmitted by the server, the first configuration information subset including M pieces of configuration information, and M being an integer greater than or equal to 1;
transmit an information pulling request to the server, for the server to obtain a second configuration information subset based on the information pulling request, the second configuration information subset including N pieces of configuration information, and N being an integer greater than or equal to 1; and
receive the second configuration information subset transmitted by the server, the second configuration information subset and the first configuration information subset belonging to the configuration information set.

In an embodiment of this application, a service processing apparatus is provided. In the foregoing apparatus, two message transfer manners, namely, active information pushing and passive information pulling, are combined, and a selection is performed according to an actual requirement. Therefore, in some cases, the server may actively push configuration information with high timeliness. In some other cases, the interactive device may pull configuration information that has a large data amount or that has a low requirement on real-time performance, thereby reducing pressure on the server.

In some embodiments, based on the embodiment corresponding to FIG. 24, in another embodiment of the service processing apparatus 40 provided in this embodiment of this application, including:
the obtaining module 410 being specifically configured to: receive the first configuration information subset for the target merchant transmitted by a cloud server, the first configuration information subset originating from a target device shadow, the target device shadow being stored in the cloud server, the target device shadow having a unique correspondence with the interactive device, and the first configuration information subset in the target device shadow being transmitted by the server to the cloud server;
transmit the information pulling request to the cloud server, for the cloud server to obtain the second configuration information subset from the target device shadow based on the information pulling request, the second configuration information subset in the target device shadow being transmitted to the cloud server by the server; and
receive the second configuration information subset for the target merchant transmitted by the cloud server.

In an embodiment of this application, a service processing apparatus is provided. In the foregoing apparatus, bidirectional communication between the interactive device and the cloud may be implemented by using the device shadow technology, and problems of an increasing quantity of devices that access and difficulty in device management may be resolved. In addition, an API for interactive device management may also be provided for the server and a client.

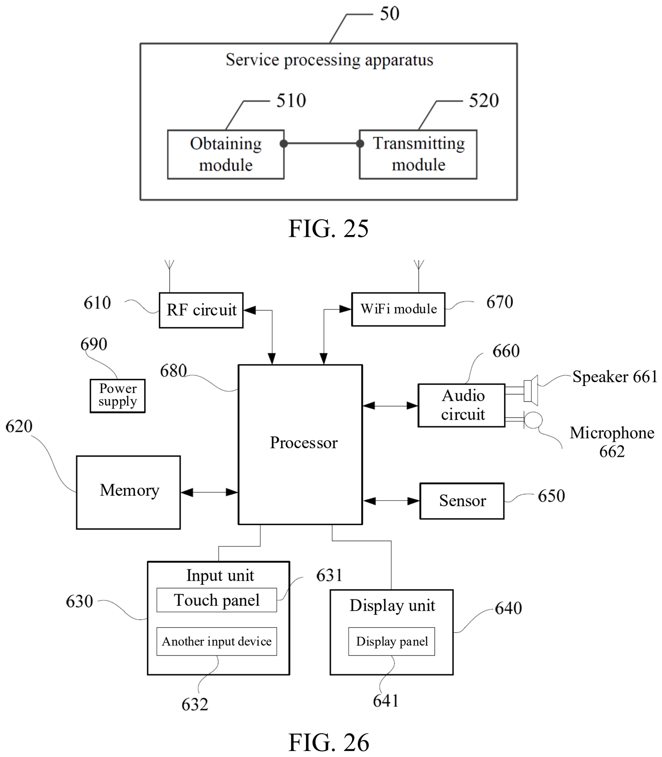

A service processing apparatus in this application is described below in detail. Referring to FIG. 25, FIG. 25 is a schematic diagram of a service processing apparatus according to an embodiment of this application. The service processing apparatus 50 includes:
an obtaining module 510, configured to obtain, in response to a configuration operation for at least one piece of information, a configuration information set for a target merchant, the target merchant being corresponding to a target merchant identifier; and
a transmitting module 520, configured to transmit the configuration information set and the target merchant identifier to a server, for the server to store the configuration information set corresponding to the target merchant identifier, the method according to the foregoing aspects being implemented in a case that an interactive device obtains the configuration information set from the server.

In an embodiment of this application, a service processing apparatus is provided. In the foregoing apparatus, a device manufacturer writes the embedded general-purpose code into the interactive device, so that each interactive device uses the same set of embedded general-purpose code to run a related service. The merchant configures related information according to a requirement of a service scenario. Based on this, after accessing the interactive device, the merchant uses the configuration information as a configuration field value in the embedded general-purpose code. Therefore, not only a standardized framework can be provided based on the embedded general-purpose code to implement a service process, but also the merchant is able to perform personalized configuration based on the standardized framework. There is no need to spend much time and manpower on developing service code, thereby reducing development costs, and improving development efficiency and code maintainability.

In some embodiments, based on the embodiment corresponding to FIG. 25, in another embodiment of the service processing apparatus 50 provided in this embodiment of this application, including:
the obtaining module 510 being specifically configured to: obtain a main title text in response to an input operation on a main title input box, the main title text belonging to the configuration information set;
obtain a subtitle text in response to an input operation on a subtitle input box, the subtitle text belonging to the configuration information set;
obtain an icon link in response to an uploading operation for an icon, the icon link belonging to the configuration information set, and the icon link indicating a storage address of the icon;
obtain a dynamic effect image link in response to an upload operation for a dynamic effect image, the dynamic effect image link belonging to the configuration information set, and the dynamic effect image link indicating a storage address of the dynamic effect image; and
obtain a color code in response to a selection operation for a background color, the color code belonging to the configuration information set, and the color code indicating the background color.

In an embodiment of this application, a service processing apparatus is provided. In the foregoing apparatus, a merchant is able to customize configuration information, and has a good configuration capability, to satisfy a personalized requirement of the merchant, so that online operation is more flexible.

In some embodiments, based on the embodiment corresponding to FIG. 25, in another embodiment of the service processing apparatus 50 provided in this embodiment of this application, including:
the obtaining module 510 being specifically configured to: obtain a poster link in response to an upload operation for a poster picture, the poster link belonging to the configuration information set, and the poster link indicating a storage address of the poster picture; and
obtain an audio link in response to an upload operation for an audio file, the audio link belonging to the configuration information set, and the audio link indicating a storage address of the audio file.

In an embodiment of this application, a service processing apparatus is provided. In the foregoing apparatus, a merchant is able to customize multimedia information such as a poster and audio, thereby not only satisfying a personalized requirement of the merchant, but also improving flexibility and richness of online operations.

An embodiment of this application further provides an electronic device. The electronic device in this application may be an interactive device or a terminal device. As shown in FIG. 26, for ease of description, only parts related to this embodiment of this application are shown. For specific technical details not disclosed, refer to the method part of the embodiments of this application. In the embodiments of this application, an example in which the electronic device is a mobile phone is used for description.

FIG. 26 is a block diagram of a partial structure of a mobile phone related to an electronic device according to an embodiment of this application. Referring to FIG. 26, the mobile phone includes: components such as: a radio frequency (RF) circuit 610, a memory 620, an input unit 630, a display unit 640, a sensor 650, an audio circuit 660, a wireless fidelity (WiFi) module 670, a processor 680, and a power supply 690. A person skilled in the art may understand that the structure of the mobile phone shown in FIG. 26 does not constitute a limitation on the mobile phone, and the mobile phone may include more or fewer components than those shown in the figure, or combine some components, or have different component arrangements.

The following specifically describes the components of the mobile phone with reference to FIG. 26.

The RF circuit 610 may be configured to receive and send a signal during information reception and transmission or calling.

The memory 620 may be configured to store a software program and a module. The processor 680 runs the software program and the module stored in the memory 620, to implement various functional applications and data processing of the mobile phone.

The input unit 630 may be configured to receive inputted digit or character information, and generate a keyboard signal input related to user settings and function control of the mobile phone.

The display unit 640 may be configured to display information inputted by the user or information provided for the user, and various menus of the mobile phone.

The mobile phone may further include at least one sensor 650 such as an optical sensor, a motion sensor, and other sensors.

The audio circuit 660, a speaker 661, and a microphone 662 may provide audio interfaces between the user and the mobile phone.

The processor 680 is a control center of the mobile phone, and is connected to various parts of an entire mobile phone by using various interfaces and lines. By running or executing the software program and/or the module stored in the memory 620, and invoking data stored in the memory 620, the processor executes various functions of the mobile phone and performs data processing.

Although not shown in the figure, the mobile phone may further include a camera, a Bluetooth module, and the like. Details are not described herein again.

Operations performed by the electronic device in the foregoing embodiment may be based on a structure of the electronic device that is shown in FIG. 23.

An embodiment of this application further provides a computer-readable storage medium, having a computer program stored therein, and the computer program, when executed by a processor, implements the operations of the method described in the foregoing embodiments.

An embodiment of this application further provides a computer program product, including a computer program, and the computer program, when executed by a processor, implements the operations of the method described in the foregoing embodiments.

In the specific implementations of this application, relevant data such as user information and biological information (for example, palm print information, face information, fingerprint information, iris information, and vocal print information) are involved. When the foregoing embodiments of this application are applied to a specific product or technology, user permission or consent is required, and collection, use, and processing of the relevant data need to comply with relevant laws, regulations, and standards of relevant countries and regions.

A person skilled in the art can clearly understand that for convenience and conciseness of description, for specific working processes of the foregoing systems, apparatuses, and units, refer to the corresponding processes in the foregoing method embodiments, and details are not described herein again.

In the several embodiments provided in this application, the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related art, or all or some of the technical solutions may be implemented in a form of a software product. The computer software product is stored in a storage medium and includes several instructions for instructing a computer device (which may be a server, a terminal device, or the like) to perform all or some of the steps of the methods described in the embodiments of this application. The foregoing storage medium includes: various media that may store a computer program, such as a USB flash disk, a mobile hard disk, a read-only memory (ROM), a random access memory (RAM), a magnetic disk, or an optical disk.

Based on the above, the foregoing embodiments are merely intended to describe the technical solutions of this application, and are not intended to limit this application. Although this application is described in detail with reference to the foregoing embodiments, a person of ordinary skill in the art is to understand that modifications may still be made to the technical solutions described in the foregoing embodiments, or equivalent replacements may be made to the part of the technical features; and these modifications or replacements will not cause the essence of corresponding technical solutions to depart from the spirit and scope of the technical solutions in the embodiments of this application.

## Claims

1. A data processing method, performed by an interactive device, the method comprising:
obtaining a configuration information set for a merchant;
displaying a service main page based on the configuration information set when embedded general-purpose code of the interactive device is run, the embedded general-purpose code being pre-written code, the embedded general-purpose code comprising a configuration field, and a configuration field value of the configuration field being assigned according to the configuration information set;
obtaining biological information of an object by using a collection apparatus of the interactive device in response to an information collection prompt on the service main page, the object being corresponding to an object account, and the object account being an account logged in on a user terminal; and
displaying, in a case that a biological recognition service is not enabled for the object account, a service enabling page in response to an authorized enabling operation from the user terminal, the service enabling page being configured for prompting that the biological recognition service is enabled, and the biological recognition service being configured for enabling performing a related service based on a biological information recognition result.

2. The method according to claim 1, wherein the displaying a service main page based on the configuration information set when embedded general-purpose code of the interactive device is run comprises:
obtaining a main title text from the configuration information set;
when the embedded general-purpose code of the interactive device is run, displaying, in a copywriting area provided on the service main page, a main title corresponding to the main title text;
in a case that the configuration information set comprises a subtitle text, when the embedded general-purpose code of the interactive device is run, displaying, in the copywriting area provided on the service main page, a subtitle corresponding to the subtitle text;
in a case that the configuration information set comprises an icon link, when the embedded general-purpose code of the interactive device is run, displaying, in an icon area provided on the service main page, an icon corresponding to the icon link;
in a case that the configuration information set comprises a dynamic effect image link, when the embedded general-purpose code of the interactive device is run, displaying, on the service main page, a dynamic effect image corresponding to the dynamic effect image link; and
in a case that the configuration information set comprises color code, when the embedded general-purpose code of the interactive device is run, displaying, on the service main page, a background color corresponding to the color code.

3. The method according to claim 1, wherein the displaying, in a case that a biological recognition service is not enabled for the object account, a service enabling page in response to an authorized enabling operation from the user terminal comprises:
displaying a code scanning enabling page in a case that the biological recognition service is not enabled for the object account, the code scanning enabling page being configured for providing a child application code; and
displaying, in a case that the user terminal scans the child application code, the service enabling page if the authorized enabling operation is triggered by using the user terminal.

4. The method according to claim 1, wherein the obtaining biological information of an object by using a collection apparatus of the interactive device in response to an information collection prompt on the service main page comprises:
obtaining, in response to the information collection prompt on the service main page by using the collection apparatus of the interactive device, an enabling information code provided by the user terminal;
obtaining the biological information of the object by using the collection apparatus of the interactive device in response to an authentication operation on the enabling information code; and/or
the displaying, in a case that a biological recognition service is not enabled for the object account, a service enabling page in response to an authorized enabling operation from the user terminal comprises:
displaying a code scanning enabling page in a case that the biological recognition service is not enabled for the object account, the code scanning enabling page being configured for providing a child application code; and
displaying, in a case that the user terminal scans the child application code, the service enabling page if the authorized enabling operation is triggered by using the user terminal.

5. The method according to claim 1, wherein after the obtaining biological information of an object by using a collection apparatus of the interactive device in response to an information collection prompt on the service main page, the method further comprises:
performing, if the biological information is successfully recognized, the operation of displaying, in a case that a biological recognition service is not enabled for the object account, a service enabling page in response to an authorized enabling operation from the user terminal; and
displaying a recognition denial pop-up window if the biological information fails to be recognized, the recognition denial pop-up window being configured for prompting a failure of biological information recognition.

6. The method according to claim 1, wherein after the displaying, in a case that a biological recognition service is not enabled for the object account, a service enabling page in response to an authorized enabling operation from the target user terminal, the method further comprises:
in a case that the configuration information set comprises a poster link, when the embedded general-purpose code of the interactive device is run, displaying a poster picture corresponding to the poster link; and
in a case that the configuration information set comprises an audio link, when the embedded general-purpose code of the interactive device is run, playing an audio file corresponding to the audio link.

7. The method according to claim 1, wherein after the obtaining biological information of an object by using a collection apparatus of the interactive device in response to an information collection prompt on the service main page, the method further comprises:
displaying, if the biological information is successfully recognized, service feedback information based on the configuration information set in a case that the biological recognition service is enabled for the object account; and
displaying a recognition denial pop-up window if the information recognition result indicates that the biological information fails to be recognized, the recognition denial pop-up window being configured for prompting a failure of biological information recognition.

8. The method according to claim 7, wherein the displaying service feedback information based on the configuration information set comprises:
transmitting payment information to a server in a case that the configuration information set comprises a payment type identifier, the payment information indicating to deduct a payment amount from a transaction account corresponding to the object account; and
displaying a payment inquiry page, the payment inquiry page being configured for prompting whether the payment amount is successfully deducted.

9. The method according to claim 7, wherein the displaying service feedback information based on the configuration information set comprises:
transmitting the object account to a server in a case that the configuration information set comprises an access control type identifier, for the server to determine a object identifier based on the object account, the object identifier being configured for uniquely representing an identifier of the object in an organization, and the object identifier having a binding relationship with the object account; and
displaying an access control pass page in response to the object identifier transmitted by the server, the access control pass page being configured for prompting that an access control device is opened.

10. The method according to claim 1, wherein the method further comprises:
obtaining, in response to a version update request of a biological recognition algorithm, a current version number of the biological recognition algorithm;
obtaining, if the current version number is inconsistent with a latest version number of the biological recognition algorithm, algorithm configuration information corresponding to the latest version number; and
updating the biological recognition algorithm based on the algorithm configuration information, the updated biological recognition algorithm being configured for recognizing biological information of an object.

11. The method according to any one of claims 1 to 10, wherein the obtaining a configuration information set for a merchant comprises:
receiving a first configuration information subset for the merchant transmitted by the server, the first configuration information subset comprising M pieces of configuration information, and M being an integer greater than or equal to 1;
transmitting an information pulling request to the server, for the server to obtain a second configuration information subset based on the information pulling request, the second configuration information subset comprising N pieces of configuration information, and N being an integer greater than or equal to 1; and
receiving the second configuration information subset transmitted by the server, the second configuration information subset and the first configuration information subset belonging to the configuration information set.

12. The method according to claim 11, wherein the receiving a first configuration information subset for the merchant transmitted by the server comprises:
receiving the first configuration information subset for the merchant transmitted by a cloud server , the first configuration information subset originating from a device shadow, the device shadow being stored in the cloud server, the device shadow having a unique correspondence with the interactive device, and the first configuration information subset in the device shadow being transmitted by the server to the cloud server;
the transmitting an information pulling request to the server, for the server to obtain a second configuration information subset based on the information pulling request comprises:
transmitting the information pulling request to the cloud server, for the cloud server to obtain the second configuration information subset from the device shadow based on the information pulling request, the second configuration information subset in the device shadow being transmitted to the cloud server by the server; and/or
the receiving the second configuration information subset transmitted by the server comprises:
receiving the second configuration information subset for the merchant transmitted by the cloud server.

13. A data processing method, performed by a terminal device, the method comprising:
obtaining, in response to a configuration operation for at least one piece of information, a configuration information set for a merchant, the merchant being corresponding to a merchant identifier; and
transmitting the configuration information set and the merchant identifier to a server, for the server to store the configuration information set corresponding to the merchant identifier, the method according to any one of claims 1 to 12 being implemented in a case that an interactive device obtains the configuration information set from the server.

14. The method according to claim 13, wherein the obtaining, in response to a configuration operation for at least one piece of information, a configuration information set for a merchant comprises:
obtaining a main title text in response to an input operation on a main title input box, the main title text belonging to the configuration information set;
obtaining a subtitle text in response to an input operation on a subtitle input box, the subtitle text belonging to the configuration information set;
obtaining an icon link in response to an uploading operation for an icon, the icon link belonging to the configuration information set, and the icon link indicating a storage address of the icon;
obtaining a dynamic effect image link in response to an upload operation for a dynamic effect image, the dynamic effect image link belonging to the configuration information set, and the dynamic effect image link indicating a storage address of the dynamic effect image; and
obtaining a color code in response to a selection operation for a background color, the color code belonging to the configuration information set, and the color code indicating the background color.

15. The method according to claim 13 or 14, wherein the obtaining, in response to a configuration operation for at least one piece of information, a configuration information set for a merchant comprises:
obtaining a poster link in response to an upload operation for a poster picture, the poster link belonging to the configuration information set, and the poster link indicating a storage address of the poster picture; and
obtaining an audio link in response to an upload operation for an audio file, the audio link belonging to the configuration information set, and the audio link indicating a storage address of the audio file.

16. A data processing apparatus, comprising:
an obtaining module, configured to obtain a configuration information set for a merchant; and
a display module, configured to display the service main page based on the configuration information set when embedded general-purpose code of an interactive device is run, the embedded general-purpose code being pre-written code, the embedded general-purpose code comprising a configuration field, and a configuration field value of the configuration field being assigned according to the configuration information set;
the obtaining module being further configured to obtain biological information of a object by using a collection apparatus of the interactive device in response to an information collection prompt on the service main page, the object being corresponding to a object account, and the object account being an account logged in on a user terminal; and
the display module being further configured to display, in a case that a biological recognition service is not enabled for the object account, a service enabling page in response to an authorized enabling operation from the user terminal, the service enabling page being configured for prompting that the biological recognition service is enabled, and the biological recognition service being configured for supporting performing a related service based on a biological information recognition result.

17. A data processing apparatus, comprising:
an obtaining module, configured to obtain, in response to a configuration operation for at least one piece of information, a configuration information set for a merchant, the merchant being corresponding to a merchant identifier; and
a transmitting module, configured to transmit the configuration information set and the merchant identifier to a server, for the server to store the configuration information set corresponding to the merchant identifier, the method according to any one of claims 1 to 12 being implemented in a case that an interactive device obtains the configuration information set from the server.

18. An electronic device, comprising a memory and a processor, the memory storing a computer program, the processor, when executing the computer program, implementing the operations of the method according to any one of claims 1 to 12 or the operations of the method according to any one of claims 13 to 15.

19. A computer-readable storage medium, having a computer program stored therein, the computer program, when executed by a processor, implementing the operations of the method according to any one of claims 1 to 12 or the operations of the method according to any one of claims 13 to 15.

20. A computer program product, comprising a computer program, the computer program, when executed by a processor, implementing the operations of the method according to any one of claims 1 to 12 or the operations of the method according to any one of claims 13 to 15.
